# EUROPÄISCHE PATENTSCHRIFT

(11) **EP 2 812 597 B1**
(45) Veröffentlichungstag und Bekanntmachung des Hinweises auf die Patenterteilung: **28.12.2016**
(21) Anmeldenummer: 13703771.9
(22) Anmeldetag: 06.02.2013
(51) Int. Cl.: F16D 65/56, F16D 66/02

(54) **BELAGVERSCHLEISSNACHSTELLVORRICHTUNG FÜR EINE SCHEIBENBREMSE**
LINING WEAR ADJUSTMENT DEVICE FOR A DISC BRAKE
DISPOSITIF DE RATTRAPAGE D'USURE DE GARNITURE POUR FREIN À DISQUE

(30) Priorität: 10.02.2012 DE 102012002731
(43) Veröffentlichungstag der Anmeldung: 17.12.2014
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(86) Internationale Anmeldenummer: PCT/EP2013/052277
(87) Internationale Veröffentlichungsnummer: WO 2013/117562

(56) Entgegenhaltungen:
- DE-A1-102008 017 225
- US-A1- 2005 241 894
- US-B2- 7 497 306

## Beschreibung

Die Erfindung betrifft eine Belagverschleißnachstellvorrichtung für eine Scheibenbremse, insbesondere für ein Kraftfahrzeug, nach dem Oberbegriff des Anspruchs 1. Die Erfindung bezieht sich auch auf ein Verfahren zum Steuern einer Belagverschleißnachstellvorrichtung und eine entsprechende Scheibenbremse.

Derartige Belagverschleißnachstellvorrichtungen sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Nachstellvorrichtung z.B. durch eine Verstellbewegung von längenveränderlichen Druckstempeln.

EP 1 476 673 B1 beschreibt eine Scheibenbremse mit elektromotorisch angetriebener Nachstellvorrichtung und ein Verfahren zum Steuern einer Scheibenbremse.

Diese Anordnungen haben sich bewährt.

Die Aufgabe der vorliegenden Erfindung besteht darin, eine verbesserte Belagverschleißnachstellvorrichtung für eine Scheibenbremse bereitzustellen.

Eine weitere Aufgabe besteht darin, eine verbesserte Scheibenbremse zu schaffen.

Die Aufgabe wird durch eine Belagverschleißnachstellvorrichtung mit den Merkmalen des Anspruchs 1, durch ein Verfahren mit den Merkmalen des Anspruchs 26 und durch eine Scheibenbremse mit den Merkmalen des Anspruchs 30 gelöst.

Die Belagverschleißnachstellvorrichtung weist eine Kupplungseinrichtung auf, welche elektrisch schaltbar mit mindestens einer Elektromagnetspule ausgebildet ist. Zum Antrieb wird ein vorhandener Bremszustellhebel benutzt. Die Übertragung des von diesem Bremszustellhebel bewirkten Drehmomentes auf eine Nachstellspindel kann mittels der schaltbaren Kupplungseinrichtung in einfacher Weise durch einen Schalter gesteuert werden.

Eine Verstellung des Bremsbelags/der Bremsbeläge kann als Zustellung aufgrund von Verschleiß aber auch als Rückstellung erfolgen. Somit kann ein so genanntes Lüftspiel zwischen Bremsbelag und Bremsscheibe eingestellt werden. Eine Rückstellung ist möglich, wenn die Kupplungseinrichtung bei einer Rückbewegung des Bremszustellhebels eingeschaltet wird.

Eine erfindungsgemäße Belagverschleißnachstellvorrichtung für eine Scheibenbremse, insbesondere für ein Kraftfahrzeug, mit einer Zuspannvorrichtung mit einem Bremszustellhebel, die vorzugsweise in eine Nachstellspindel der Scheibenbremse einsetzbar ist, umfasst eine Nachstellwelle mit einem Außenlager; ein Drehantriebselement; und eine Kupplungseinrichtung zum schaltbaren Kuppeln des Drehantriebselement mit der Nachstellwelle. Die Kupplungseinrichtung ist elektrisch schaltbar mit mindestens einer Elektromagnetspule ausgebildet.

Ein erfindungsgemäßes Verfahren zum Steuern einer Belagverschleißnachstellvorrichtung einer Scheibenbremse, insbesondere für ein Kraftfahrzeug, mit einer Zuspannvorrichtung mit einem Bremszustellhebel, und mindestens eine Nachstellspindel, weist ein Nachstellen bei erfasstem Belagverschleiß nach Erreichen eines voreinstellbaren Vergleichswertes durch Bestromen der Elektromagnetspule der Kupplungseinrichtung bei einer Bremszustellung durch den Bremszustellhebel auf.

Weitere vorteilhafte Ausgestaltungen sind in den Unteransprüchen angegeben.

Nach einer Ausführung umfasst die Kupplungseinrichtung mindestens einen Abschnitt des Drehantriebselementes oder/und einen Abschnitt, der mit dem Drehantriebselement drehfest verbunden ist, einen Kupplungsdeckel, die mindestens eine Elektromagnetspule und einen Spulenträger. Dadurch wird ein kompakter Aufbau möglich.

Es ist vorgesehen, dass das Drehantriebselement an einer Eingangsseite der Kupplungseinrichtung um eine gemeinsame Achse der Nachstellspindel und der Kupplungseinrichtung verschwenkbar und axial verschiebbar angeordnet ist.
In einer Alternative kann der mit dem Drehantriebselement drehfest verbundene Abschnitt axial verschiebbar sein, wobei dann das Drehantriebselement nur eine Schwenkbewegung ausführt.
Auf diese Weise kann das Drehantriebselement von Bremszustellhebel verschwenkt werden, ohne dass eine Zustellung erfolgt. Erst wenn die Kupplungseinrichtung eingeschaltet ist, erfolgt eine Drehmomentübertragung auf die Nachstellspindel, wobei das Drehantriebselement beim Einkuppeln axial in die Eingriffsstellung der Kupplungseinrichtung verschoben wird.

Nach einer Ausführung ist der Spulenträger mit dem Drehantriebselement drehfest verbunden. Damit ist ein kompakter Aufbau möglich, wobei die Elektromagnetspule mit dem Drehantriebselement verschwenkbar ist.

Nach einer alternativen Ausführung ist der Spulenträger mit dem Außenlager der Nachstellwelle feststehend verbunden. Die Elektromagnetspule verschwenkt bei einem Verstellvorgang nicht. Durch geeignete Werkstoffwahl des Spulenträgers können die Magnetkraftlinien der Elektromagnetspule im eingeschalteten Zustand vorteilhaft beeinflusst werden, um ein Streufeld möglichst gering zu halten und eine hohe Kupplungskraft zu bewirken.

Nach einer weiteren alternativen Ausführung weist der Spulenträger einen Scheibenabschnitt mit einer im zentralen Bereich kugelförmigen Schalenaufnahme auf, wobei die kugelförmige Schalenaufnahme einen kugelförmigen Vorsprung einer Scheibe des Außenlagers der Nachstellwelle aufnimmt und mit dem kugelförmige Vorsprung der Scheibe des Außenlagers korrespondiert. Damit kann vorteilhaft eine Winkelbewegung der Belagverschleißnachstellvorrichtung während Betätigung ausgeglichen werden.

Nach einer weiteren Ausführung ist vorgesehen, dass der Kupplungsdeckel die Elektromagnetspule topfförmig umgibt, mit der Nachstellwelle drehfest verbunden ist und einen Kupplungsbereich aufweist, welcher mit einem Abschnitt des Drehantriebselementes oder mit einem Abschnitt, der mit dem Drehantriebselement drehfest verbunden ist, einen Kupplungsabschnitt bildet. Durch Einbeziehen von Abschnitten des Drehantriebselementes kann ein kompakter Aufbau der gesamten Belagverschleißnachstellvorrichtung ermöglicht werden.

Nach einer Ausführung ist der Kupplungsabschnitt mit Reibbelägen ausgebildet. Diese können z.B. als Beschichtung ausgeführt oder als Zusatzteile aufgebracht sein.

Nach einer alternativen Ausführung , dass der Kupplungsabschnitt als Zahnkupplung ausgebildet ist. Der als Zahnkupplung ausgebildete Kupplungsabschnitt kann einen schrägen Winkel aufweisen, wobei dieser Winkel z.B. im Bereich von 20° liegen kann. So können die Kupplungskräfte im eingekuppelten Zustand gering gehalten werden, wobei die Elektromagnetspule entsprechend wenig Raum beansprucht. Nach einer weiteren Ausführung ist die Kupplungseinrichtung mit mindestens einer Lösefeder oder Rückstellfeder versehen. So ist ein ausgekuppelter bzw. gelöster Zustand der Kupplungseinrichtung auch unter schwierigen Umgebungsbedingungen, z.B. Temperaturunterschiede und/oder Vibration, gewährleistet.

Zur Kompensation von Winkelbewegungen des Nachstellers kann das Außenlager nach einer alternativen Ausführung mit einer kardanischen Lagerung der Nachstellwelle ausgebildet sein.

Die Belagverschleißnachstellvorrichtung weist eine Anschlusseinrichtung auf, welche mit der mindestens einen Elektromagnetspule elektrisch leitend verbunden ist. Mittels einer Steckverbindung ist die Elektromagnetspule elektrisch angeschlossen. Dadurch ist es möglich, die Anschlusseinrichtung bei Wartung oder Austausch einfach und schnell zu wechseln, ohne dass besondere elektrische Verbindungen mittels Werkzeug gelöst oder hergestellt werden müssen.

Nach einer anderen Ausführung weist die Steckverbindung Leiter auf, welche mittels einer elastischen Halterung durch das Außenlager geführt und in diesem gehalten sind. Dadurch können Verspannungen und Bewegungen während der Betätigung der Belagverschleißnachstellvorrichtung ausgeglichen werden. Die Elektromagnetspule ist an die Leiter angeschlossen.

Nach einer weiteren Ausführung ist vorgesehen, dass die Belagverschleißnachstellvorrichtung mindestens einen Belagverschleißsensor, welcher auch Gegenstand einer eigenständigen Anmeldung sein kann, aufweist. Damit ist es möglich, einen Nachstellvorgang in Abhängigkeit von dem Verschleiß von Bremsbelägen und Bremsscheibe gezielt auszuführen, indem die Kupplungseinrichtung entsprechend ein- und ausgeschaltet wird.

Nach einer anderen Ausführung ist der mindestens eine Belagverschleißsensor zumindest teilweise ein Bestandteil der Anschlusseinrichtung. Damit ist ein besonders kompakter und einfacher Aufbau möglich.

Es ist besonders vorteilhaft, wenn der mindestens eine Belagverschleißsensor als Winkelsensor ausgebildet ist, wobei ein Verschleißsensorelement in der Anschlusseinrichtung angeordnet ist und mit einem Verschleißgeberelement zusammenwirkt, welches mit der Nachstellwelle verbunden ist. Dabei kann das Verschleißsensorelement z.B. ein Hall-Sensor sein, wobei das Verschleißgeberelement ein Permanentmagnet sein kann. Dabei ist vorteilhaft, dass eine Wirkung des Permanentmagneten auf das Sensorelement über ein drahtloses Magnetfeld erfolgt. So ist z.B. eine getrennte Montage von Verschleißsensorelement in der Anschlusseinrichtung und Verschleißgeberelement auf der Nachstellwelle möglich, was Austausch- und Wartungsarbeiten und insbesondere Abgleicharbeiten erleichtert.

Nach einer noch weiteren Ausführung weist die Belagverschleißnachstellvorrichtung mindestens einen Zustellhebelsensor, welcher auch Gegenstand einer eigenständigen Anmeldung sein kann, auf. Auch dieser kann zumindest teilweise ein Bestandteil der Anschlusseinrichtung und auch als Winkelsensor ausgebildet sein. Hierbei kann ebenfalls wie bei dem Belagverschleißsensor ein Zustellsensorelement in der Anschlusseinrichtung angeordnet sein und mit einem Zustellgeberelement zusammenwirken, welches mit dem Bremszustellhebel gekoppelt ist.

Es ist auch hier wie beim Beschlagverschleißsensor von großem Vorteil, wenn das Zustellgeberelement ein Permanentmagnet ist. Durch Auswahl gleicher Sensorelemente und Geberelemente ist eine Ersatzteilzahl reduziert. Außerdem können zur Auswertung und Anschluss der Sensorelemente gleiche identische Bauteile und Auswerteprogramme verwendet werden.

Nach einer weiteren Ausführung kann die Anschlusseinrichtung eine Steuereinrichtung aufweisen. Damit sind Nachrüstungen bestehender Scheibenbremse möglich, da z.B. bisherige elektromechanische Potentiometer elektronisch nachbildbar sind, wobei vorhandene Anschlüsse für Potentiometer an einem Steuergerät durch die nachgebildeten Anschlüsse, z.B. durch die Steuereinrichtung, weiterhin verwendbar sind.

Nach einer noch weiteren Ausführung ist vorgesehen, dass die Kupplungseinrichtung mindestens einen Eigenverdrehschutz aufweist. Dies kann z.B. durch separate Reibflächen an den Bauteilen von Kupplungseinrichtung und Außenlager zusammen mit Kraftspeicherelementen, z.B. Druck-/Zugfedern erfolgen. Somit werden eine sichere Haltekraft und ein robuster Aufbau erreicht.

Nach einer weiteren Ausführung des Verfahrens ist es möglich, dass das Bestromen der Elektromagnetspule in Abhängigkeit von einer erfassten Bewegung des Bremszustellhebel erfolgt. Dies ist möglich, wenn eine Kombination von Belagverschleißsensor und Zustellhebelsensor in der Belagverschleißnachstellvorrichtung vorhanden ist.

Nach einer noch weiteren Ausführung kann ein Reibepunkt über den Kraftschluss der Nachstellspindel erfasst werden, indem die Zustellbewegung des Bremszustellhebels und eine Verstellbewegung der Belagverschleißnachstellvorrichtung erfasst werden. Wenn bei einer Zustellbewegung des Bremszustellhebels gleichzeitig eine Verstellbewegung erfolgt, dann aber trotz weiterer Zustellbewegung nicht mehr vorhanden ist, ist der Reibepunkt erreicht. Dies kann auch der Fall sein, wenn zu Beginn einer Zustellbewegung keine Verstellbewegung erfolgt.

Nach einer noch weiteren Ausführung ist vorgesehen, dass die Belagverschleißnachstellvorrichtung durch Bestromen der Elektromagnetspule durch eine Rückbewegung des Bremszustellhebels um einen voreinstellbaren Wert zurückgestellt wird, wenn der Bremsbelag ohne Zuspannung an der Bremsscheibe anliegt und schleift. Ein solches Anliegen und Schleifen kann z.B. durch einen Temperatursensor erfasst werden.

Es ist außerdem möglich, durch Rückbewegungen des Bremszustellhebels bei gleichzeitigem Einschalten der Kupplungseinrichtung den Bremsbelag/die Bremsbeläge in seine/ihre Ausgangsstellung zurückzustellen, was z.B. zum Austausch und Wartung notwendig ist.

Eine Scheibenbremse mit einer Zuspannvorrichtung mit einem Bremszustellhebel, mindestens einer Nachstellspindel weist mindestens eine oben beschriebene Belagverschleißnachstellvorrichtung auf.

Mittels der Belagverschleißnachstellvorrichtung ist durch die Kupplungseinrichtung mit der Elektromagnetspule, mit anderen Worten: mit einer Elektromagnetkupplung, nicht nur eine Belagverschleißnachstellung sondern auch eine Belagrückstellung, z.B. im Fehlerfall oder bei Austausch und Wartung, möglich. Somit ist auch eine so genannte Lüftspieleinstellung auf einfache Weise ermöglicht. Dabei ist die Antriebsquelle wie bisher bei mechanischen Nachstellvorrichtungen der Bremszustellhebel.

Außerdem ist eine so genannte Stand-Alone-Version möglich, die in bisherige Serienbremsen nachträglich einbaubar ist.

Die Belagverschleißnachstellvorrichtung weist eine Anschlusseinrichtung auf, die in einer Version ein Analogsignal des Belagverschleißsensors und des Zustellhebelsensors (wenn eingesetzt) zur Verfügung stellt. Hierzu weist die Anschlusseinrichtung eine Steuereinrichtung, z.B. einen Mikrocomputer bzw. Kleinrechner auf. Die Anschlusseinrichtung kann aber auch die Sensorsignale digital ohne Steuereinrichtung an ein übergeordnetes Steuergerät mit entsprechender Steuereinrichtung übertragen.

Bei einem erkannten Ausfall der elektrischen Bremse (z.B. Fehlen einer 5-V-Versorgungsspannung eines Potentiometers) kann die Nachführung des Bremsbelags sichergestellt werden. Dies erfolgt durch Ansteuerung der Elektromagnetspule nach erkanntem überbrückten Lüftspiel, solange die Bremse noch zustellt, jedoch nicht beim Lösen der Bremse.

Die Stand-Alone-Version ist kompatibel zu bisherigen Ausführungen und somit austauschbar zur Nachrüstung.

Die Belagverschleißnachstellvorrichtung weist außerdem folgende Vorteile auf:
- Autarke elektrische Belagerkennung und Nachstellung
- Analoge Belagverschleißausgabe
- Hohes mögliches Drehmoment zur Verstellung mittels Zahnkupplung
- Sichere Haltekraft durch eine, vorzugsweise zwei Reibflächen (Anstelle von Reibflächen sind auch Rampenverzahnungen möglich)
- Einfacher robuster Aufbau
- Eigene Versorgungsspannung
- Belagverschleißnachführung auch im Notbetrieb der Bremse (Back Up)

Die Belagverschleißnachstellvorrichtung kann zudem eine Überlastkupplung, z.B. eine Kugelrampenkupplung oder Schrägverzahnung aufweisen.

Die Elektromagnetspule kann auch mittels PWM oder anderer geeigneter Ansteuerungen bestromt werden. Damit kann z.B. eine einstellbare Überlastkupplung erreicht werden.

Die Elektromagnetspule ist mit Anschlussdrähten einer Leitung versehen, welche an eine Steckverbindung angeschlossen ist. Dabei können die Anschlussdrähte Litzen oder Leiterbahnen einer flexiblen Leiterplatte sein, welche durch ihre Flexibilität Winkelbewegungen bei Betätigung der Belagverschleißnachstellvorrichtung ausgleichen können.

Außerdem kann es möglich sein, dass die Anschlusseinrichtung mit einer Signalverarbeitung für ein Drehzahlsignal eines Drehzahlsensors des zugehörigen Rades versehen ist. Dabei kann der Drehzahlsensor auch an die Anschlusseinrichtung angeschlossen werden, wobei sein Drehzahlsignal durch die Signalverarbeitung so verarbeitet werden kann, dass es in einem gemeinsamen Kabel von der Scheibenbremse zum Steuergerät zur Auswertung übertragbar ist. Dies kann auch Gegenstand einer eigenständigen Anmeldung sein.

Die Erfindung wird nun anhand beispielhafter Ausführungen mit Bezug auf die beigefügten Zeichnungen näher erläutert. Hierbei zeigen:
- Fig. 1-2: schematische Schnittansichten eines ersten Ausführungsbeispiels einer erfindungsgemäßen Belagverschleißnachstellvorrichtung für eine Scheibenbremse in einer gelösten und einer aktivierten Stellung;
- Fig. 3: eine schematische Schnittansicht eines zweiten Ausführungsbeispiels der erfindungsgemäßen Belagverschleißnachstellvorrichtung;
- Fig. 4: eine schematische Schnittansicht einer Variante des zweiten Ausführungsbeispiels nach Fig. 3;
- Fig. 5: eine schematische Schnittansicht eines dritten Ausführungsbeispiels der erfindungsgemäßen Belagverschleißnachstellvorrichtung;
- Fig. 6: eine schematische Schnittansicht eines vierten Ausführungsbeispiels der erfindungsgemäßen Belagverschleißnachstellvorrichtung;
- Fig. 7: eine schematische Schnittansicht einer Variante des vierten Ausführungsbeispiels nach Fig. 6;
- Fig. 8: eine schematische Draufsicht eines Außenlagers des vierten Ausführungsbeispiels nach Fig. 6;
- Fig. 9-11: schematische Schnittansichten von weiteren Varianten des vierten Ausführungsbeispiels nach Fig. 6;
- Fig. 12: eine schematische Schnittansicht eines fünften Ausführungsbeispiels der erfindungsgemäßen Belagverschleißnachstellvorrichtung;
- Fig. 13: eine schematische Schnittansicht einer Variante des fünften Ausführungsbeispiels nach Fig. 12;
- Fig. 14: ein schematisches Blockschaltbild des zweiten Ausführungsbeispiels nach Fig. 3;
- Fig. 15: eine schematische Darstellung einer üblichen Steckerbelegung;
- Fig. 16-17: schematische Darstellungen von verschiedenen Steckerbelegungen des zweiten Ausführungsbeispiels nach Fig. 3;
- Fig. 18: ein schematisches Blockschaltbild des dritten und vierten Ausführungsbeispiels nach Fig. 5 und 6;
- Fig. 19: eine schematische Darstellung einer üblichen Steckerbelegung;
- Fig. 20: eine schematische Darstellung einer Steckerbelegung des dritten und vierten Ausführungsbeispiels nach Fig. 5 und 6;
- Fig. 21: ein weiteres schematisches Blockschaltbild des dritten und vierten Ausführungsbeispiels nach Fig. 5 und 6;
- Fig. 22: eine schematische Darstellung einer üblichen Steckerbelegung;
- Fig. 23: eine schematische Darstellung einer weiteren Steckerbelegung des dritten und vierten Ausführungsbeispiels nach Fig. 5 und 6; und
- Fig. 24: ein noch weiteres schematisches Blockschaltbild des dritten und vierten Ausführungsbeispiels nach Fig. 5 und 6.

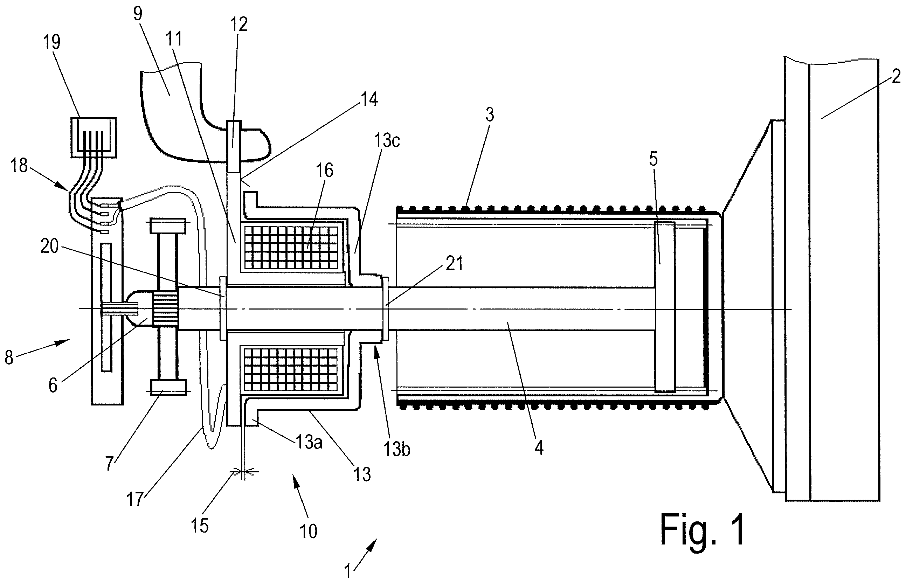

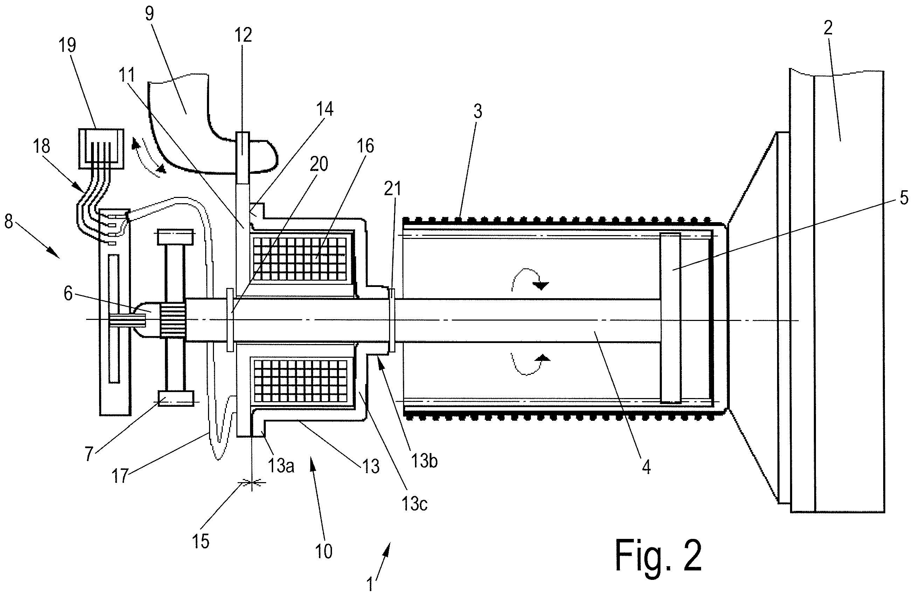

Fig. 1 ist eine schematische Schnittansicht eines ersten Ausführungsbeispiels einer erfindungsgemäßen Belagverschleißnachstellvorrichtung 1 für eine Scheibenbremse in einer gelösten Stellung. Fig. 2 zeigt das erste Ausführungsbeispiel in einer aktivierten Stellung.

Eine Scheibenbremse ist hier von ihrer Zuspannseite gezeigt und weist einen nicht dargestellten Bremssattel auf, der eine ebenfalls nicht gezeigte Bremsscheibe übergreift. An der Bremsscheibe sind beidseitig Bremsbeläge 2 angeordnet, von denen hier nur der zuspannseitige Bremsbelag 2 mit einer Nachstellspindel 3, mit welcher der Bremsbelag 2 verbunden ist, abgebildet ist. Der andere Bremsbelag ist im Bremssattel festgelegt. Der Bremssattel kann zum Beispiel ein Schiebesattel sein. Ein Bremszustellhebel 9 zum Zuspannen der Scheibenbremse ist angedeutet. Die Nachstellspindel 3 ist mit einem Außengewinde versehen und in einen nicht gezeigten Druckstempel eingeschraubt, welcher mit dem Bremszustellhebel zusammenwirkt. Die Scheibenbremse kann mehr als einen Druckstempel mit jeweiliger Nachstellspindel 3 besitzen.

Die Nachstellspindel 3 ist außerdem mit einem Innengewinde versehen, welches mit einem Abtriebsrad 5 einer Nachstellwelle 4 in Eingriff steht. Das Abtriebsrad 5 ist hier an einem Ende der Nachstellwelle 4, welches zum Bremsbelag 2 weist, verdrehfest angebracht.

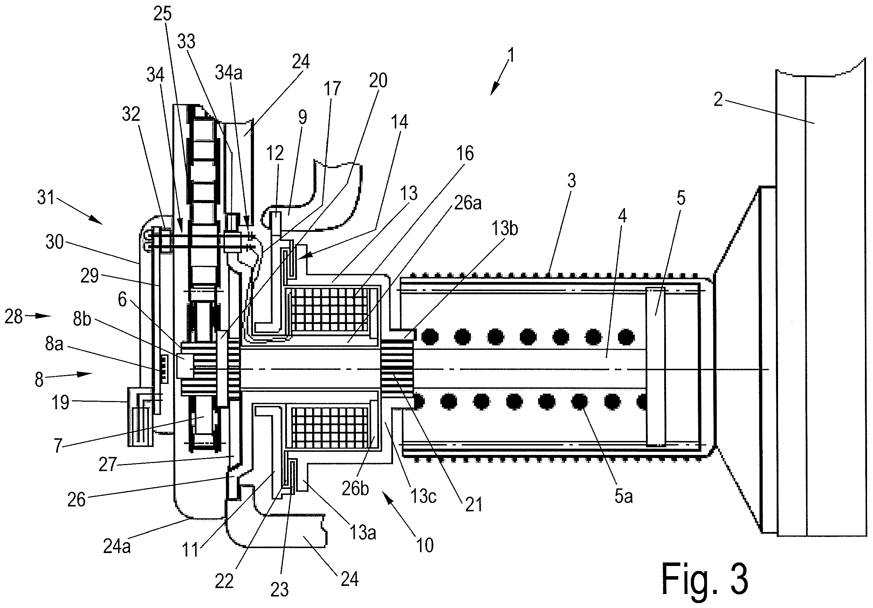

Das andere Ende der Nachstellwelle 4 ist in diesem ersten Ausführungsbeispiel als Übertragungsende 6 mit einem Übertragungsrad 7 versehen und mit einem Belagverschleißsensor 8 gekoppelt. Das Übertragungsrad 7 ist z.B. als Kettenzahnrad ausgebildet und über eine Kette 25 (siehe Fig. 3) mit einer weiteren, nicht gezeigten Nachstellspindel gekoppelt. Der Belagverschleißsensor 8 weist in dieser Ausführung z.B. ein Potentiometer mit oder ohne Getriebe auf. Das Potentiometer kann auch ein Mehrgangpotentiometer sein und ist über eine Verbindungsleitung 18 mit einem Verbindungselement 19 elektrisch verbunden. Das Verbindungselement 19 dient zur elektrischen Verbindung mit einem Bremssteuergerät oder einem anderen Steuergerät und kann z.B. als mehrpoliger, bespielsweise fünfpolig, Winkelstecker ausgebildet sein. Ein elektrischer Widerstand des Mehrgangpotentiometers ist von einem Drehwinkel der angekoppelten Nachstellwelle 4 veränderbar und proportional zu dem Belagverschleiß des Bremsbelags 2 bzw. der Bremsbeläge der Scheibenbremse.

Die Nachstellwelle 4 ist in dem Abschnitt, der sich an das Übertragungsende 6 anschließt, mit einer Kupplungseinrichtung 10 gekoppelt. Die Kupplungseinrichtung 10 ist als elektromagnetische Kupplung ausgebildet und weist ein Drehantriebselement 11 mit einem Zahneingriff 12, einen Kupplungsdeckel 13 und eine Elektromagnetspule 16 auf. Das Drehantriebselement 11 mit dem Zahneingriff 12 ist an der Eingangsseite der Kupplungseinrichtung 10 angebracht, wobei der Zahneingriff 12 mit dem Bremszustellhebel 9 zusammenwirkt. Der Zahneingriff 12 ist radial von der Nachstellwelle 4 entfernt an einer Scheibe des Drehantriebselementes 11 angeformt. Diese Scheibe ist mit einem Spulenträger 26a, der hier ein Rohrabschnitt ist, drehfest verbunden. Der Spulenträger 26a trägt die ringförmige Elektromagnetspule 16 und ist auf der Nachstellwelle 4 axial verschiebbar. Die axiale Verschiebbarkeit des Drehantriebselementes 11 und des mit ihm in diesem Ausführungsbeispiel verbundenen Spulenträgers 26a wird durch Axialanschläge 20, 21 auf der Nachstellwelle 4 begrenzt. Die Elektromagnetspule 16 ist über eine Leitung 17 elektrisch mit der Verbindungsleitung 18 und somit mit dem Verbindungselement 19 verbunden.

Die ringförmige Elektromagnetspule 16 auf dem Spulenträger 26a ist von dem Kupplungsdeckel 13 haubenförmig umgeben. Der Kupplungsdeckel 13 ist an seiner zur Scheibe des Drehantriebselementes 11 weisenden Seite mit einem flanschartigen Kupplungsbereich 13a versehen und in der hier in Fig. 1 gezeigten gelösten Stellung über einen Kupplungsspalt 15 von einem mit ihm korrespondierenden Bereich beabstandet. Dieser Kupplungsbereich 13a und der mit ihm korrespondierende Bereich des Drehantriebselementes 11 bilden einen Kupplungsabschnitt 14. Diese Bereiche des Kupplungsabschnitts 14 können z.B. mit speziellen Reibschichten oder Reibbelägen ausgebildet sein.

Der Kupplungsdeckel 13 erstreckt sich von dem Kupplungsbereich 13a parallel zur Nachstellwelle 4 zu der zum Bremsbelag 2 weisenden Seite, auf welcher der Kupplungsdeckel 13 mit einem Wandabschnitt 13c in radialer Richtung bis zu einem zentralen flanschartigen Verbindungsabschnitt 13b verschlossen ist. Der flanschartige Verbindungsabschnitt 13b ist drehfest mit der Nachstellwelle 4 verbunden und zusätzlich axial über den Axialanschlag 21 festgelegt.

Zum Verdrehen der Nachstellspindel 3 zum Nachstellen des Bremsbelags 2 wird die Bewegung des Bremszustellhebels 9 beim Zuspannen der Scheibenbremse genutzt. Wenn eine Nachstellung erfolgen soll, wird die Elektromagnetspule 16 eingeschaltet, d.h. mit Strom über die Leitung 17 versorgt. Durch die dabei erzeugte elektromagnetische Wirkung entstehen magnetische Kraftlinien, welche durch das Drehantriebselement 11, den Kupplungsdeckel 13 und auch zum Teil durch die Nachstellwelle 4 verlaufen. Das axial verschiebbare Drehantriebselement 11 wird dabei auf der Nachstellwelle 4 mit dem flanschartigen Kupplungsbereich 13a des Kupplungsdeckels 13 über die zugehörigen Kupplungselemente, z.B. Reibflächen oder Reibbeläge, zusammengekuppelt. Dabei schließt sich der Kupplungsspalt 15. Diese aktivierte Stellung ist in Fig. 2 dargestellt. Die Elektromagnetspule 16, welche auf dem mit dem Drehantriebselement 11 fest verbundenen Spulenträgers 26a angebracht ist, verschwenkt ebenfalls mit der Schwenkbewegung des Drehantriebselementes 11. Die Leitung 17 ist dabei flexibel ausgebildet, z.B. als Litzendrähte oder als flexible Leiterfolie.

Bei einer Zuspannbewegung des Bremszustellhebels 9 wird nun über den Zahneingriff 12 das Drehantriebselement 11 verschwenkt und über die aktivierte Kupplungseinrichtung 10 ein Drehmoment über den Kupplungsabschnitt 14 auf den Kupplungsdeckel 13 und auf die Nachstellwelle 4 übertragen. Durch ein solches Verdrehen der Nachstellwelle 4 wird die Nachstellspindel 3 über das Abtriebsrad 5 ebenfalls verdreht und bewirkt mit ihrem Außengewinde in dem Druckstempel eine axiale Verstellung des Bremsbelags 2 auf die Bremsscheibe zu, um einen Verschleiß der Bremsbelags 2 auszugleichen. Bewegt sich der Bremszustellhebel 9 zurück in seine Ausgangslage, wird die Elektromagnetspule 16 zuvor ausgeschaltet, also nicht mehr bestromt, so dass keine Drehmomentübertragung vom Bremszustellhebel 9 auf die Nachstellwelle 4 mehr erfolgt. Die Bewegungen des Bremszustellhebels 9 und der Nachstellwelle 4 sind mit Pfeilen angedeutet.

Die Drehmomentübertragung der Kupplungseinrichtung 10 ist so ausgelegt, dass bei nicht vorhandenem Belagverschleiß, also bei nicht nachzustellendem Bremsbelag 2, ein Durchrutschen der Kupplungseinrichtung 10 erfolgen kann.

Außerdem kann anstelle einer Nachstellbewegung die Kupplungseinrichtung 10 auch nur bei der Rückbewegung des Bremszustellhebels 9 aktiviert werden, wodurch eine Rückstellung des Bremsbelags 2 möglich ist.

Die Aktivierung der Kupplungseinrichtung 10 kann anhand unterschiedlicher Kriterien erfolgen, wie z.B. nach einer festlegbaren Anzahl von Zuspannvorgängen und gemessenem Belagverschleiß mittels des Belagverschleißsensors 8. Eine Aktivierung der Kupplungseinrichtung 10 zum Rückstellen des Bremsbelags 2 kann z.B. im Fehlerfall und zum Bremsbelagwechsel und durch Betätigen des Bremszustellhebels 9 erfolgen. Außerdem ist es möglich, die Belagverschleißnachstellvorrichtung 1 mittels Aktivierung der Kupplungseinrichtung 10 zurückzustellen, wenn der Bremsbelag 2 ohne Zuspannung an der Bremsscheibe anliegt und schleift. Dies kann wiederum durch verschiedene Kriterien festgestellt werden, wie z.B. durch Temperatursensoren an geeigneter Stelle in der Nähe des Bremsbelags 2 bzw. dessen Trägers.

Fig. 3 zeigt eine schematische Schnittansicht eines zweiten Ausführungsbeispiels der erfindungsgemäßen Belagverschleißnachstellvorrichtung 1.

Die Kupplungseinrichtung 10 des zweiten Ausführungsbeispiels ist ebenfalls als elektromagnetische Kupplung ausgebildet und weist das Drehantriebselement 11 mit dem Zahneingriff 12, den Kupplungsdeckel 13 und die Elektromagnetspule 16 auf.

Im Unterschied zum ersten Ausführungsbeispiel ist die Elektromagnetspule 16 feststehend auf dem Spulenträger 26a angebracht. Der Spulenträger 26a ist hier ein Rohrabschnitt eines ortsfesten Außenlagers 26 und führt im aktivierten Zustand bei Verschwenkbewegungen des Drehantriebselementes 11 keine mit diesem verbundene Schwenkbewegungen aus. Das Außenlager 26 ist drehfest mit dem Bremsengehäuse 24 verbunden.

Das Drehantriebselement 11 mit dem Zahneingriff 12 ist an der Eingangsseite der Kupplungseinrichtung 10 angebracht, wobei der Zahneingriff 12 mit dem Bremszustellhebel 9 zusammenwirkt. Der Zahneingriff 12 ist radial von der Nachstellwelle 4 entfernt an der Scheibe des Drehantriebselementes 11 angeformt. Diese Scheibe ist jedoch nur mit einem kurzen Flanschabschnitt mit einer Bohrung versehen, durch welche sich der Spulenträger 26a axial hindurch erstreckt. Der kurze Flanschabschnitt des Drehantriebselementes ist somit auf dem Spulenträger 26a des Außenlagers 26 axial verschiebbar angeordnet. Die axiale Verschiebbarkeit des Drehantriebselementes 11 wird durch die scheibenförmige Ausbildung des Außenlagers zum Übertragungsende 6 der Nachstellwelle 4 hin und durch den Kupplungsdeckel 13 zum Bremsbelag 2 hin begrenzt. Die Elektromagnetspule 16 ist über die Leitung 17 elektrisch mit Anschlussenden 34a von Leiterelementen 34 einer Steckverbindung 31 verbunden. Auf diese Verbindung wird unten noch näher eingegangen.

Die ringförmige Elektromagnetspule 16 auf dem Spulenträger 26a des Außenlagers 26 ist auch in dem zweiten Ausführungsbeispiel von dem Kupplungsdeckel 13 haubenförmig bzw. topfförmig umgeben. Der Kupplungsdeckel 13 ist an seiner zur Scheibe des Drehantriebselementes 11 weisenden Seite mit dem flanschartigen Kupplungsbereich 13a versehen und mit einem Reibbelag 22 verbunden, welcher mit einem Reibbelag 23 zusammenwirkt, der an der Scheibe des Drehantriebselementes 11 angebracht ist. Es können natürlich auch mehrere Reibbeläge sein. Diese Reibbeläge 22, 23 bilden zusammen mit den zugehörigen Halterungen den Kupplungsabschnitt 14.

Der Kupplungsdeckel 13 erstreckt sich in diesem zweiten Ausführungsbeispiel auch von dem Kupplungsbereich 13a parallel zur Nachstellwelle 4 zu der zum Bremsbelag 2 weisenden Seite, und ist mit dem Wandabschnitt 13c in radialer Richtung bis zu dem zentralen flanschartigen Verbindungsabschnitt 13b verschlossen. Der flanschartige Verbindungsabschnitt 13b ist auch hier drehfest mit der Nachstellwelle 4 verbunden. Er dient gleichzeitig zur Abstützung einer Zuspannfeder 5a, welche zwischen ihm und dem Abtriebsrad 5 axial um die Nachstellwelle 4 angeordnet ist. Die Zuspannfeder 5a drückt den Kupplungsdeckel 13 mit der Innenseite des Wandabschnitts 13c gegen ein Reibelement 26b und bildet einen ersten Eigenverdrehschutz. Das Reibelement 26b ist drehfest auf dem Spulenträger 26a des Außenlagers 26 zum Bremsbelag 2 weisend von dem Kupplungsdeckel 13 umgeben angeordnet.

Das Außenlager 26 ist mit seinem als Scheibe ausgebildeten zum Übertragungsende 6 der Nachstellwelle 4 weisenden Abschnitt in einem Bremsengehäuse 24 der Scheibenbremse, die nicht näher dargestellt ist, drehfest angebracht. Das Außenlager 26 bildet somit eine Lagerung für die Nachstellwelle 4 im Bremsengehäuse 24. Die zum Übertragungsende 6 der Nachstellwelle 4 weisende Fläche des als Scheibe ausgebildeten Abschnitts des Außenlagers 26 steht in Kontakt mit einer Reibscheibe 27, die an dem Axialanschlag 20 auf der Nachstellwelle 4 drehfest auf der Nachstellwelle 4 angeordnet ist. Die Reibscheibe 27 und das Außenlager 26 bilden einen zweiten Eigenverdrehschutz. Der erste und dieser zweite Eigenverdrehschutz bilden z.B. einen Drehmomentwiderstand von ca. 2,4 Nm. Andere Werte sind selbstverständlich bauartbedingt möglich.

In Fig. 3 ist die Kette 25 gezeigt, welche als Drehmomentübertragungsglied das Übertragungsrad 7 mit einem anderen Übertragungsrad einer weiteren, nicht gezeigten Nachstellwelle verbindet. Die Kette 25 ist mit einer Abdeckung 24a abgedeckt, die in nicht näher dargestellter Weise mit dem Bremsengehäuse 24 verbunden ist. Auf dieser Abdeckung 24a ist im Bereich des Übertragungsendes 6 der Nachstellwelle 4 einen Anschlusseinrichtung 28 angeordnet.

Die Anschlusseinrichtung 28 umfasst das Verbindungselement 19, eine Leiterplatte 29, die Steckverbindung 31 und den Belagverschleißsensor 8. Die Verbindungsleitungen 18 (siehe Fig. 1 und 2) sind als Leiterbahnen der Leiterplatte 29 ausgebildet und verbinden einerseits die Steckverbindung 31 und ein Verschleißsensorelement 8a mit dem Verbindungselement 19.

Das Verbindungselement 19 kann z.B. als Winkelstecker ausgebildet sein. Die Steckverbindung 31 bildet eine steckbare Verbindung zwischen einem auf der Leiterplatte 29 angebrachten Steckverbinder 32 und den Leiterelementen 34. Die Leiterelemente 34 sind hier in einer Halterung 33 festgelegt, welche in der Scheibe des Außenlagers 26 in flexibler Weise aufgenommen ist. Die Enden der Leiterelemente 34 besitzen zum Bremsbelag 2 hin weisende Anschlussenden 34a, an welchen die Anschlussdrähte der Elektromagnetspule 16 als Leitung 17 angeschlossen sind. Die anderen Enden der Leiterelemente 34 sind hier in dem Steckverbinder 32 an der zum Bremsbelag 2 weisenden Seite der Leiterplatte 29 eingesteckt. Die Leiterelemente 34 sind z.B. als einzeln isolierte, starre Metalldrähte freistehend und sich senkrecht zur Kette 25 durch diese erstreckend angeordnet. Sie können aber auch in einem Isolierkörper, z.B. aus Kunststoff, eingebettet bzw. mit Isolierwerkstoff umspritzt sein. Die Steckverbindung 31 kann auch so aufgebaut sein, dass die Halterung 33 zur Anschlusseinrichtung 28 weisend den Steckverbinder 32 aufweist, wobei die Leiterelemente 34 an der Leiterplatte 29 fest elektrisch leitend angebracht sind.

An der zum Bremsbelag 2 hin weisenden Seite der Leiterplatte 29 ist der Stirnseite des Übertragungsendes 6 der Nachstellwelle 4 gegenüber liegend das Verschleißsensorelement 8a, z.B. ein Hall-Sensorelement, angeordnet, welches mit einem Verschleißgeberelement 8b, z.B. ein Permanentmagnet, das in dem Übertragungsende 6 der Nachstellwelle 4 platziert ist, als Winkelsensor zusammenwirkt. Auch das Verschleißsensorelement 8a ist mit den Anschlusskontakten des Verbindungselementes 19 elektrisch verbunden, so dass z.B. ein Stecker sowohl für die Übertragung der elektrischen Leistung für die Elektromagnetspule 16 als auch der elektrischen Signale des Belagverschleißsensors 8 verwendbar ist.

Das Verschleißsensorelement 8a erzeugt in Abhängigkeit von der Winkelstellung des Verschleißgeberelementes 8b ein zu der Winkelstellung proportionales elektrisches Signal (analog oder digital), welches in einer zugehörigen Auswerteschaltung ausgewertet wird und als Maß für den Verschleiß der Bremsbeläge 2 und auch der Bremsscheibe der Scheibenbremse weiter verwendet wird. Dies wird unten noch näher beschrieben.

Die Anschlusseinrichtung 28 ist in einem Gehäuse 30 angeordnet und gegen äußere Einflüsse (Eindringen von Staub und Feuchtigkeit, IP-Schutzart) und Zugriff geschützt. Das Gehäuse 30 ist modulartig auf die Abdeckung 24a der Kette 25 aufgesteckt und z.B. mittels gemeinsam genutzter Schrauben befestigt. In einer anderen, nicht dargestellten, aber vorstellbaren Ausführung kann die Anschlusseinrichtung 28 z.B. mit dem Außenlager 26 verbunden sein.

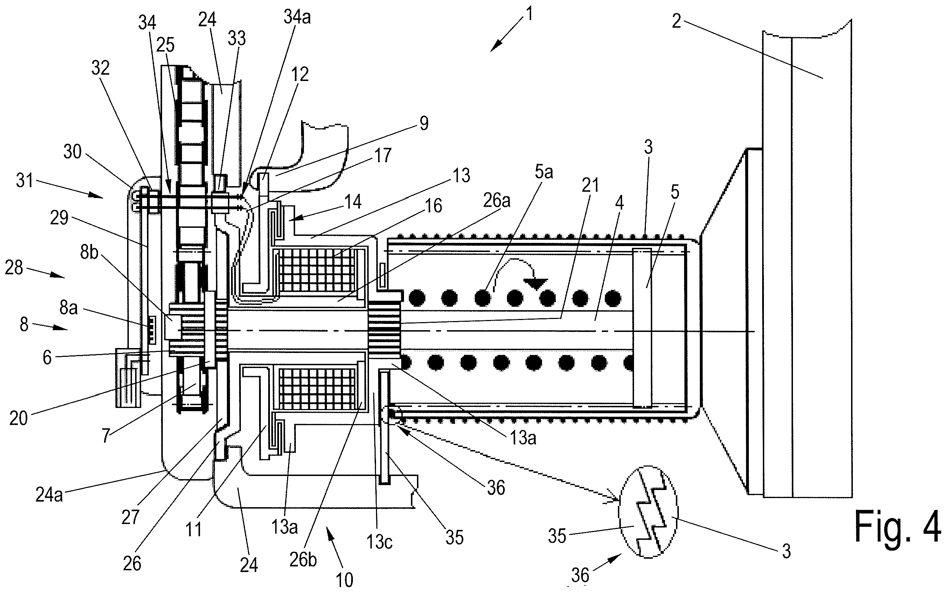

Fig. 4 stellt eine schematische Schnittansicht einer Variante des zweiten Ausführungsbeispiels nach Fig. 3 dar.

Die Nutzung von zwei Reibflächen, nämlich das Reibelement 26b mit dem inneren Wandabschnitt 13c als ersten Eigenverdrehschutz und die Reibscheibe 27 mit dem Außenlager 26 als zweiten Eigenverdrehschutz erhöht die maximal mögliche Reibkraft und somit auch die Gesamtzuverlässigkeit gegenüber einem Ausfall des Eigenverdrehschutzes durch Verschmutzung.

Die in Fig. 4 gezeigte Variante weist gegenüber dem zweiten Ausführungsbeispiel nach Fig. 3 eine Rampenverzahnung 36 auf, welche in einer Detailansicht vergrößert dargestellt ist. Die Rampenverzahnung 36 umfasst eine Verzahnung an der Stirnseite der Nachstellspindel 3, welche zur Kupplungseinrichtung 10 weist, und ein Drehbegrenzungselement 35 mit korrespondierender Verzahnung. Das Drehbegrenzungselement 35 ist am Bremsengehäuse 24 zumindest drehfest befestigt und zwischen der Kupplungseinrichtung 10 und der Stirnseite der Nachstellspindel 3 angeordnet. Dabei weist das Drehbegrenzungselement 35 hier eine Bohrung auf, durch welche sich der Verbindungsabschnitt 13b des Kupplungsdeckels 13 hindurch frei erstreckt.

Mittels dieser Rampenverzahnung 36 kann eine Drehbegrenzung im Falle einer vollständigen Rückstellung des Belagverschleißnachstellvorrichtung 1 erreicht werden, ohne dass die Gefahr eines Festziehens des Spindelgewindes am Anschlag besteht.

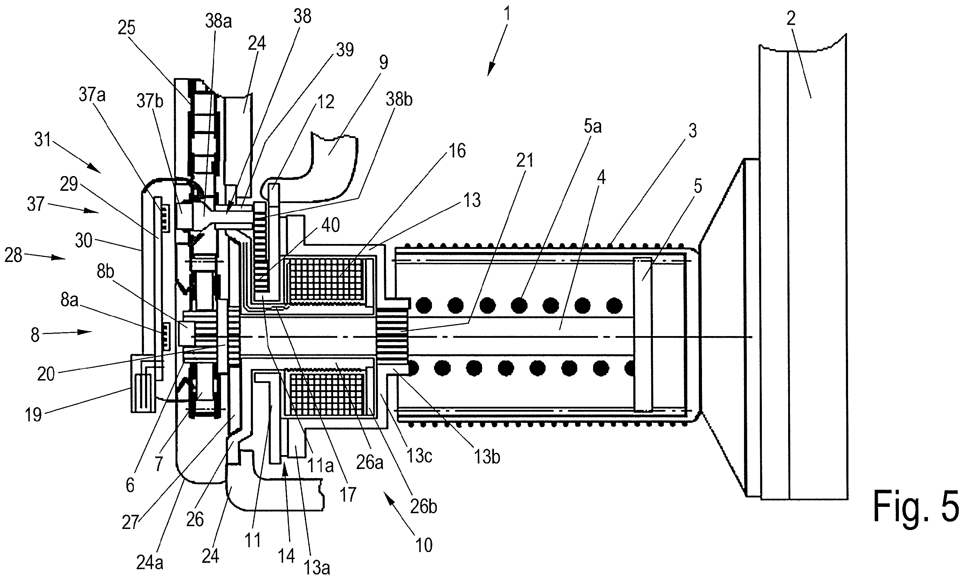

Bei einem dritten Ausführungsbeispiel der erfindungsgemäßen Belagverschleißnachstellvorrichtung 1, das Fig. 5 in einer schematischen Schnittansicht zeigt, ist der Aufbau ähnlich wie beim zweiten Ausführungsbeispiel. Der Kupplungsabschnitt 14 ist nur symbolisch dargestellt. Die Steckverbindung 31 zum Anschluss der Elektromagnetspule 16 ist wie im vorigen Beispiel vorhanden, jedoch nicht zu sehen.

Die Belagverschleißnachstellvorrichtung 1 weist in diesem dritten Ausführungsbeispiel einen zusätzlichen Zustellhebelsensor 37 auf.

Der Zustellhebelsensor 37 umfasst ein Zustellsensorelement 37a, ein Zustellgeberelement 37b und eine Trägerwelle 38. Das Zustellsensorelement 37a kann wie das Verschleißsensorelement 8a z.B. ein Hall-Sensorelement sein und ist an der zum Bremsbelag 2 weisenden Seite der Leiterplatte 29 der Anschlusseinrichtung 28 angeordnet. Der Zustellhebelsensor 37 ist hier wie der Belagverschleißsensor 8 aufgebaut, wobei das Zustellsensorelement 37a mit dem Zustellgeberelement 37b als Winkelsensor zusammenwirkt. Das Zustellgeberelement 37b ist z.B. auch ein Permanentmagnet, der in einem Trägerabschnitt 38a an einem verdickten Ende der Trägerwelle 38 angeordnet ist. Der sich daran zum Bremsbelag 2 hin erstreckende Abschnitt der Trägerwelle 38 weist einen geringeren Durchmesser als der Trägerabschnitt 38a auf und ist in einem Lager 39, z.B. einer Messing- oder Kunststoffbuchse, verdrehbar in einem Randabschnitt der Scheibe des Außenlagers 26 aufgenommen. Die Trägerwelle 38 erstreckt sich parallel zur Achse der Nachstellwelle 4 bis über einen Flanschabschnitt 11a des Drehantriebselementes 11. In einer alternativen Ausführung schneidet sich ein Achsdrehpunkt der Trägerwelle 38 mit einem Achsdrehpunkt des Lagers des Bremszustellhebels 9. Dies ermöglicht eine optimale Funktion des Winkelgetriebes, d.h. das Winkelgetriebe ist weitgehend verschleißfrei. Der Flanschabschnitt 11a weist zum Übertragungsende 6 der Nachstellwelle 4 und ist mit einem Zahnsegment 40 versehen und fest verbunden. Das Zahnsegment 40 steht mit einer Trägerverzahnung 38b der Trägerwelle 38 in Eingriff. Die Trägerverzahnung 38b ist an dem über dem Flanschabschnitt 11a angeordneten Ende der Trägerwelle 38 angeformt.

Bei einer Verschwenkung des Bremszustellhebels 9 verschwenkt auch das Drehantriebselement 11 zusammen mit dem Zahnsegment 40. Dabei wird über die in Eingriff stehenden Verzahnungen des Zahnsegments 40 und der Trägerverzahnung 38b die Trägerwelle 38 verschwenkt und gleichzeitig das Zustellgeberelement 37b des Zustellhebelsensors 37. Auf diese Weise wird eine Verschwenkbewegung des Bremszustellhebels 9 durch den Zustellhebelsensor 37 erfasst und als elektrisches Analog- oder/und Digitalsignal über die Leiterplatte 29 an das Verbindungselement 19 zur weiteren Verwendung, die unten noch näher erläutert wird, weitergeleitet. Das Verbindungselement 19 ist somit für die Übertragung der elektrischen Leistung für die Elektromagnetspule 16 als auch der elektrischen Signale des Belagverschleißsensors 8 und des Zustellhebelsensors 37 verwendbar.

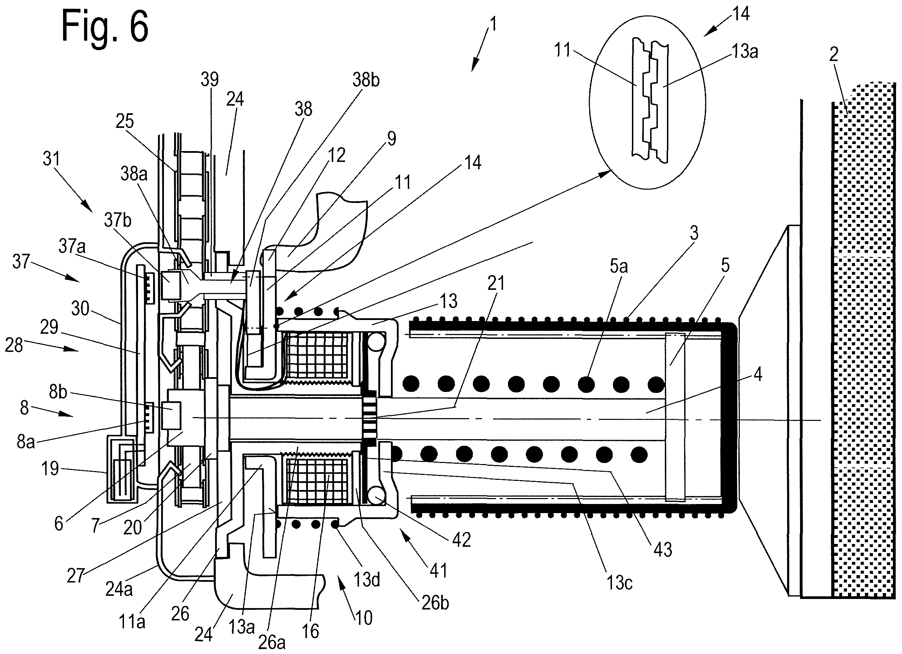

Fig. 6 zeigt eine schematische Schnittansicht eines vierten Ausführungsbeispiels der erfindungsgemäßen Belagverschleißnachstellvorrichtung 1.

Die Anschlusseinrichtung 28 ist wie im dritten Ausführungsbeispiel mit dem Belagverschleißsensor 8, der Steckverbindung 31 und dem Zustellhebelsensor 37 ausgerüstet.

Der Kupplungsabschnitt 14 ist hier als Zahnkupplung ausgebildet. Eine Verzahnung des Kupplungsabschnitts 14 ist auf dem Drehantriebselement 11 angeordnet. Die damit korrespondierende Verzahnung ist an dem Kupplungsbereich 13a des Kupplungsdeckels 13 eingeformt oder angebracht. Der Kupplungsdeckel 13 erstreckt sich wie in den vorhergehenden Ausführungsbeispielen parallel zur Achse der Nachstellwelle 4, wobei der radiale Wandabschnitt 13c nicht mit der Nachstellwelle 4 verbunden ist, sondern einen Bestandteil einer Überlastkupplung 41 bildet.

Die Überlastkupplung 41 ist hier als eine so genannte Kugelrampenkupplung mit Kugeln 42 und einem scheibenartigen Koppelelement 43 ausgebildet. Das Koppelelement 43 steht mit seiner zum Bremsbelag 2 weisenden Seite über die Kugeln 42 mit dem Wandabschnitt 13c des Kupplungsdeckels 13 in Wirkverbindung. Die zum Übertragungsende 6 der Nachstellwelle 4 weisende Seite des Koppelelementes 43 bildet mit dem Reibelement 26b den ersten Eigenverdrehschutz der Belagverschleißnachstellvorrichtung 1. Das Koppelelement 43 ist mittels eines Flansches mit der Nachstellwelle 4 auf dem Axialanschlag 21 drehfest verbunden.

Die Überlastkupplung 41 ist axial durch die Zuspannfeder 5a zwischen dem Abtriebsrad 5 und dem Wandabschnitt 13c vorgespannt. Außerdem ist auf der zylindrischen Außenseite des Kupplungsdeckels 13 zwischen dem Drehantriebselement 11 und einem auf der Außenseite des Kupplungsdeckels 13 angeformten Anschlag eine Lösefeder 13d angeordnet, welche bestrebt ist, den Kupplungsabschnitt 14 in Axialrichtung der Nachstellwelle 4 auseinander zu drücken, d.h. die Kupplungseinrichtung 10 in die ausgekuppelte, gelöste Stellung zu bringen.

In diesem vierten Ausführungsbeispiel kann die Elektromagnetspule 16 kleiner als in den vorhergehenden ausgebildet sein, da sie nur die elektromagnetische Kraft zum Einkuppeln des Kupplungsabschnitts 14, nämlich für das Ineingriffbringen der Verzahnungen aufbringen muss. Bei diesem Einkuppeln müssen keine Reibbeläge mit einer bestimmten Normalkraft zur Übertragung eines Drehmomentes aufeinander gepresst werden. Das Drehmoment wird durch die in Eingriff gebrachten Zähne übertragen.

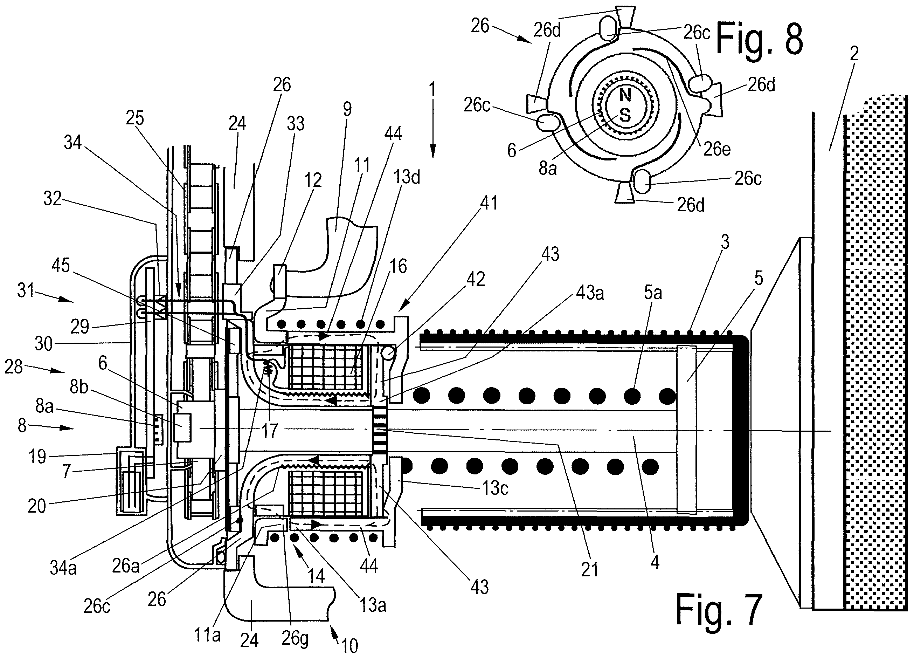

Fig. 7 stellt eine schematische Schnittansicht einer Variante des vierten Ausführungsbeispiels nach Fig. 6 dar. Der Zustellhebelsensor 37 ist nicht gezeigt, aber leicht vorstellbar.

In dieser Variante ist das Außenlager 26 glockenförmig ausgebildet, wobei dessen Spulenträger 26a bogenförmig in die Scheibe des Außenlagers 26 übergeht. Im Randbereich des Außenlagers 26 ist die Halterung 33 für die Steckverbindung 31 aufgenommen. Die Halterung 33 kann im Außenlager 26 befestigt sein, wobei sie jedoch mit dem Gehäuse 24 bewegungsfest verbunden sein kann. Sie kann elastisch, d.h. biegsam zwischen dieser Befestigung und den Anschlussenden 34a, ausgebildet sein. Die Anschlussenden 34a erstrecken sich hier bis kurz vor die Elektromagnetspule 16 in einem Bereich zwischen dem Außenlager 26, der Elektromagnetspule 16 und einem Haltering 26g, auf welchem der Flanschabschnitt 11a des Drehantriebselementes 11 gehalten ist. Der Bereich, in welchem sich die Anschlussenden 34a und der Haltering 26g befinden, kann z.B. mit Kunststoff ausgegossen sein. Für den bestromten Fall der Elektromagnetspule 16 ist der Verlauf von Magnetkraftlinien 44 angedeutet, welcher durch die Konstruktion des Außenlagers 26 und des bogenförmigen Übergangs zum Spulenträger 26a so geleitet ist, dass er nicht oder nur in sehr geringem Maße durch die Nachstellwelle 4 verläuft. D.h. das magnetische rung zum Einkuppeln der Kupplungseinrichtung 10 bewirkt werden kann. Der Anschlag der Lösefeder 13d ist hier in radialer Verlängerung des Wandabschnitts 13c des Kupplungsdeckels 13 gebildet. Das Koppelelement 43 ist mit einem Koppelelementflansch 43a gezeigt, mit dem es auf der Nachstellwelle 4 drehfest aufgebracht ist. Anstelle der Reibscheibe 27 ist ein Verdrehschutzelement 45 vorgesehen, welches in einer Axialfixierung 26c mit dem Außenlager 26 den zweiten Eigenverdrehschutz bildet. Der erste Eigenverdrehschutz wird durch einen Abschnitt der Stirnseite des feststehenden Spulenträgers 26a, der zum Bremsbelag 2 weist, und dem Koppelelementflansch 43a gebildet.

Das Außenlager 26 ist mit einer kardanischen Aufhängung bzw. Lagerung 26e für die Nachstellwelle 4 versehen. Dies ist in Fig. 8 schematisch in einer vergrößerten Draufsicht dargestellt. Das Übertragungsende 6 der Nachstellwelle 4, welches das Verschleißsensorelement 8a trägt, ist in der kardanischen Lagerung 26e angeordnet, wodurch Verspannungen der Nachstellwelle 4 an diesem Ende vermieden werden und die Genauigkeit des Belagverschleißsensors 8 erhöht wird. Das Außenlager 26 ist mit Radialfixierungen 26c und Axialfixierungen 26d am Bremsengehäuse 24 angebracht.

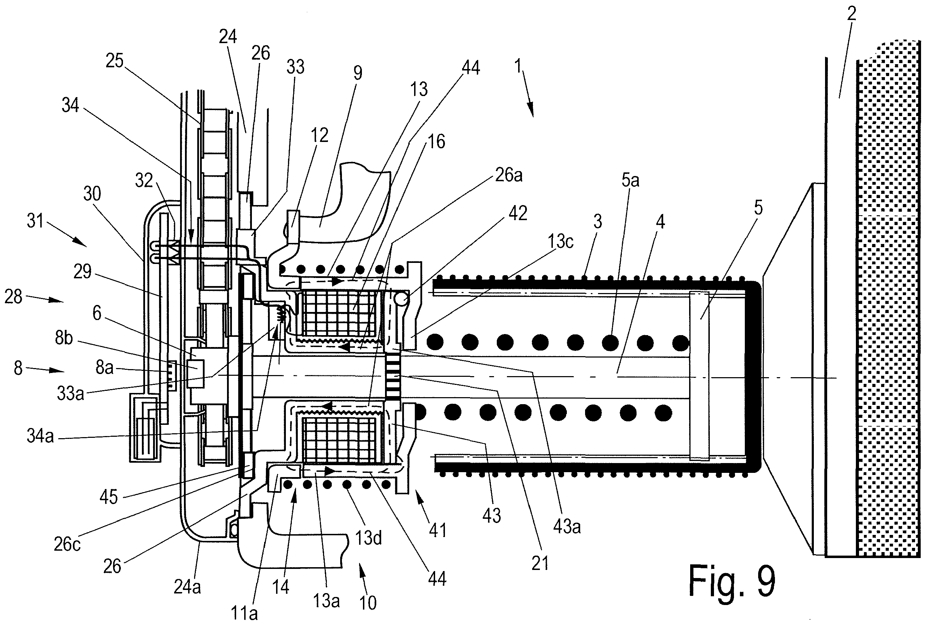

Die Figuren 9 bis 11 stellen schematische Schnittansichten von weiteren Varianten des vierten Ausführungsbeispiels nach Fig. 6 dar.

Alle Varianten der Figuren 9 bis 11 weisen den oben beschriebenen verzahnten Kupplungsabschnitt 14 auf. Auch wenn der Zustellhebelsensor 37 nicht gezeigt ist, kann er jeweils vorhanden sein, wie leicht vorstellbar ist.

In der in Fig. 9 gezeigten Variante ist das Außenlager 26 im Unterschied zu der Variante nach Fig. 7 mit Schultern ausgebildet. Der Spulenträger 26a verläuft zwischen der Elektromagnetspule 16 und der Nachstellwelle 4 parallel zu dieser als Rohrabschnitt und biegt an der Seite, die zum Übertragungsende 6 der Nachstellwelle 4 weist, um im Wesentlichen 90° radial nach außen bis unter den Flanschabschnitt 11a ab. Die Elektromagnetspule 16 ist somit auch an der zum Übertragungsende 6 der Nachstellwelle 4 weisenden Seite von dem Spulenträger 26a gehalten. Dadurch ist der Verlauf der Magnetkraftlinien 44 verbessert. Das Außenlager 26 mit dem Spulenträger 26a ist z.B. aus einem metallischen Werkstoff hergestellt, welcher zur Leitung der Magnetkraftlinien 44 geeignet ist, wie z.B. Eisen. Die Scheibe des Außenlagers 26 kann so wie in Fig. 8 gezeigt ausgebildet sein.

Unter dem Flanschabschnitt 11a verläuft das Außenlager 26 wieder parallel zur Nachstellwelle 4 und bildet die Art Schulter, welche für den Flanschabschnitt 11 a eine radiale Halterung bildet, um die das Drehantriebselement 11 verschwenkbar ist. Dann geht diese Schulter nochmals in eine weitere Schulter und dann in die Scheibe des Außenlagers 26 über. Im Randbereich des Außenlagers 26 ist auch hier die Halterung 33 für die Steckverbindung 31 aufgenommen. Die Anschlussenden 34a erstrecken sich hier bis vor den radial nach außen verlaufende Abschnitt des Spulenträgers 26a. In einer nicht gezeigten Variante können die Anschlussenden 34a aber auch wie in Fig. 3 und 4 ausgebildet angeordnet sein.

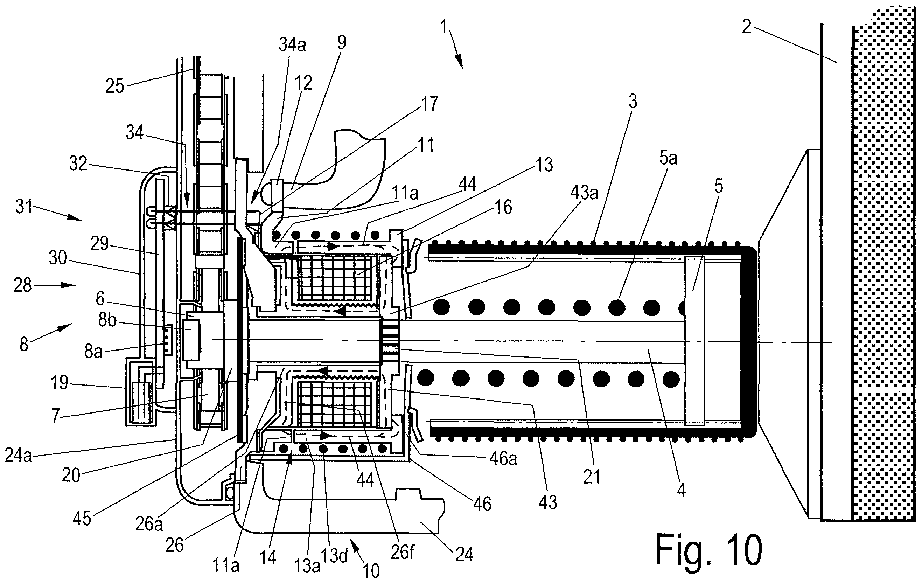

Das Außenlager 26 besteht in der in Fig. 10 dargestellten Variante des vierten Ausführungsbeispiels aus zwei Bestandteilen. Die Scheibe des Außenlagers 26 ist ein separates Teil, welches aus einem Werkstoff, z.B. Kunststoff, ausgebildet ist. Es kann im Bereich der Steckverbindung 31 elastische Eigenschaften aufweisen, um Verspannungen und Versetzungen der Nachstellwelle 4 zu kompensieren. Außerdem ist diese Scheibe des Außenlagers 26 in axialer Richtung der Nachstellwelle 4 im zentralen Bereich um diese herum mit einer größeren Dicke versehen als in den Befestigungsbereichen am Bremsengehäuse. In diesem zentralen Bereich mit größere Dicke ist eine Bohrung eingeformt, in welcher ein zylindrischer Abschnitt des Spulenträgers 26a eingesetzt ist. Zwischen dem Außenlager 26 und der Elektromagnetspule 16 weist der Spulenträger 26a einen sich radial nach außen erstreckenden Scheibenabschnitt 26f auf, der an seinem Außenumfang axial verbreitert ist. Diese axiale Verbreiterung dient zum Tragen des Flanschabschnitts 11a des Drehantriebselementes 11.

Die zum Bremsbelag 2 weisende Seite des Kupplungsdeckels 13 der Kupplungseinrichtung 10 weist einen radial nach innen und nach außen vorstehenden Randabschnitt auf. Der radial nach außen vorstehende Randabschnitt des Kupplungsdeckels 13 dient als Gegenlager für die Lösefeder 13d. Zwischen dem radial nach innen hervorstehende Randabschnitt und der auf dem Spulenträger 26a befestigten Elektromagnetspule 16 ist das Koppelelement 43 angeordnet. Ein Randabschnitt des Koppelelementes 43, welcher den radial nach innen hervorstehenden Randabschnitt des Kupplungsdeckels 13 kontaktiert, bildet mit diesem den ersten Eigenverdrehschutz als Überlastkupplung 41 in Form einer Überlast-Rutschkupplung (z.B. >10 Nm) mittels einer Verzahnung. Diese Überlast-Rutschkupplung wird über einen Druckabschnitt 46a mittels eines den Kupplungsdeckel 13 zumindest teilweise umgreifenden, hülsenartigen und Anschlagbegrenzungselementes 46 zusammengehalten und über die Zuspannfeder 5a mit einer Axialkraft in Richtung auf das Übertragungsende 6 der Nachstellwelle 4 beaufschlagt.

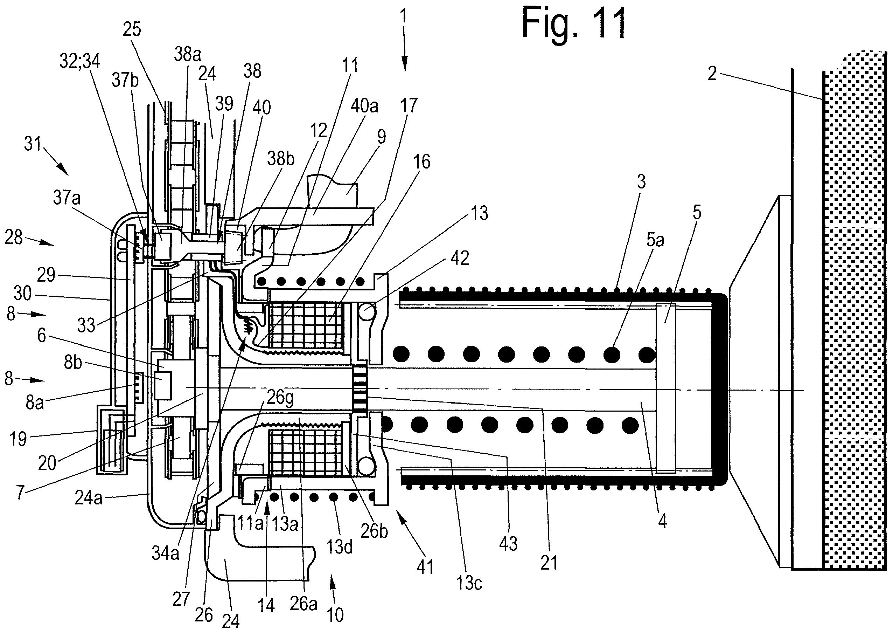

Fig. 11 zeigt eine Variante des vierten Ausführungsbeispiels mit dem glockenförmigen Außenlager 26, dem dicht an der Elektromagnetspule 16 angeordneten Anschlussenden 34a der Steckverbindung 31 und dem Haltering 26g (siehe Fig. 7), wobei die Überlastkupplung 41 mit Kugeln 42 und dem Koppelelement 43 zusätzlich mit dem Reibelement 26b als erster Eigenverdrehschutz kombiniert ist.

In dieser Variante ist der Antrieb der Trägerwelle 38 des Zustellhebelsensors 37 mit einem Zahnsegmenthalter 40a für das Zahnsegment 40 ausgebildet. Dabei ist der Zahnsegmenthalter 40a direkt an dem Bremszustellhebel 9 angebracht, da das Drehantriebselement 11 auf dem Haltering 26g in Höhe des Kupplungsdeckels 13 verschwenkbar angeordnet ist. Das Zahnsegment 40 steht dabei auf der von der Nachstellwelle 4 abgewandten Seite der Trägerwelle 38 mit der Trägerverzahnung 38b in Eingriff.

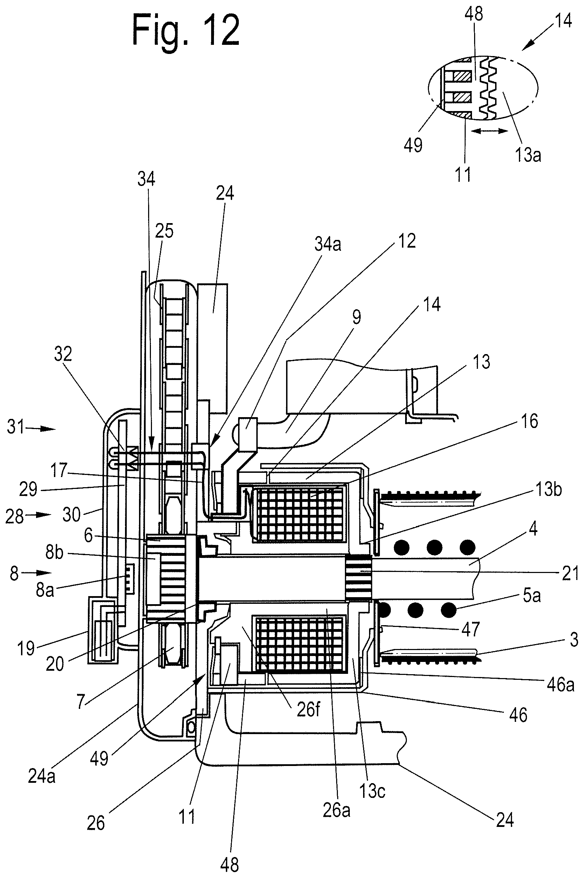

Fig. 12 zeigt eine schematische Schnittansicht eines fünften Ausführungsbeispiels der erfindungsgemäßen Belagverschleißnachstellvorrichtung 1.

Im Unterschied zu den vorhergehenden Ausführungsbeispielen besteht das Außenlager 26 in dem fünften Ausführungsbeispiel aus zwei Bestandteilen. Die Scheibe des Außenlagers 26 ist ein separates Teil, welches aus einem Werkstoff, z.B. Kunststoff, ausgebildet ist. Der Spulenträger 26a trägt die Elektromagnetspule 16. Zum Außenlager 26 hin weisend besitzt der Spulenträger 26a einen Scheibenabschnitt 26f mit einer im zentralen Bereich kugelförmigen Schalenaufnahme, welche mit einem entsprechenden kugelförmigen Vorsprung der Scheibe des Außenlagers 26 korrespondiert, diesen aufnimmt und darüber mit dem Außenlager zusammenwirkt. Das Außenlager 26 ist weiterhin mit einem Verdrehschutz bei der Leitung 17 der Spulenanschlussdrähte der Elektromagnetspule 16 versehen. Somit können Winkelbewegungen der Belagverschleißnachstellvorrichtung 1 während einer Betätigung ausgeglichen werden. Die Leitung 17 ist lediglich am Ausgang zur Steckverbindung 31 (Anschlussenden 34a) an einem Spulenkörper der Elektromagnetspule 16 fixiert, so dass sie die Winkelbewegungen (ca. ± 0,5°) sich biegend ausgleichen können.

Das Drehantriebselement 11 ist auf einem Absatz des Scheibenabschnitts 26f verschwenkbar angebracht. In Richtung auf das Übertragungsende 6 der Nachstellwelle 4 hin ist das Drehantriebselement 11 axial festgelegt, z.B. durch einen Wellensicherungsring, d.h. das Drehantriebselement 11 ist axial nicht verschiebbar. In Gegenrichtung dazu, d.h. in Richtung auf den Kupplungsdeckel 13 hin ist das Drehantriebselement 11 mit einem Kupplungselement 48 drehfest gekoppelt, welches auf Höhe des Kupplungsdeckels 13 der Kupplungseinrichtung 10 liegt und axial verschiebbar ist. Der aus dem Kupplungselement 48 und dem Kupplungsbereich 13a gebildete Kupplungsabschnitt 14 ist als Zahnkupplung mit schrägem Winkel ausgebildet. In der vergrößerten Ausschnittsdarstellung in Fig. 12 rechts oben ist die Verzahnung dargestellt. Das Kupplungselement 48 weist auf der zum Bremsbelag 2 weisenden Seite die Kupplungszähne des Kupplungsabschnitts 14 auf. Die Kupplungszähne wirken mit korrespondierenden Kupplungszähnen des Kupplungsbereichs 13a des Kupplungsdeckels 13 zusammen. Auf der gegenüberliegenden Seite der Kupplungszähne des Kupplungselementes 48 erstrecken sich Fortsätze des Kupplungselementes 48 durch das Drehantriebselement 11 hindurch. Die Enden dieser Fortsätze des Kupplungselementes 48 stehen außerdem auf der zum Übertragungsende 6 der Nachstellwelle 4 weisenden Seite mit einer Rückstellfeder 49, z.B. ein umlaufender federnder Blechring, in Kontakt. Die Rückstellfeder 49 dient zur Rückstellung der Kupplungseinrichtung 10 in die gelöste Stellung, welche in Fig. 12 gezeigt ist. In der gelösten Stellung stehen die Kupplungszähne des Kupplungsabschnitts 14 außer Eingriff. Mit anderen Worten, das Kupplungselement 48 wird bei Bestromung der Elektromagnetspule 16 axial in Richtung auf den Bremsbelag 2 hin verschoben (Doppelpfeil) und die Kupplungszähne des Kupplungselementes 48 kommen mit den Kupplungszähnen des Kupplungsdeckels 13 in Eingriff. Mittels der drehfesten Verbindung (Fortsätze des Kupplungselementes 48) steht das Kupplungselement 48 weiterhin auch in Eingriff mit dem Drehantriebselement 11 und kann auf diese Weise die Schwenkbewegung des Drehantriebselementes 11 auf den Kupplungsdeckel 13 und somit auf die Nachstellwelle 4 übertragen.

Der schräge Winkel der Kupplungszähne des als Zahnkupplung ausgebildeten Kupplungsabschnitts 14 ist so ausgelegt, dass sich im Überlastfall die Kupplungszähne des Kupplungsabschnitts 14 lösen. Dieser schräge Winkel kann z.B. im Bereich von 20° liegen. Die Übergänge der Flanken der Kupplungszähne zu den Zahnköpfen der Kupplungszähne können gerundet sein, um einen weichen Eingriff zu ermöglichen.

Durch eine Anpassung der Magnetfeldstärke der Elektromagnetspule 16, z.B. mittels einer PWM-Ansteuerung (PWM: Pulsweitenmodulation) kann der Überlastpunkt variiert werden. Es ist außerdem möglich, mittels der PWM-Ansteuerung die Haltereibung samt Reibkraft der Nachstellspindel 3 zu ermitteln. Damit lässt sich das Überlastdrehmoment präzise mittels korrigierter PWM-Ansteuerung erfassen.

Das Anschlagbegrenzungselement 46 ist als eine topfförmige Abdeckung der Kupplungseinrichtung 10 ausgebildet und im Bereich des Bremszustellhebels 9 mit einer Aussparung versehen. Eine zusätzliche Reibfläche, z.B. mittels einer Reibscheibe, zum ersten Eigenverdrehschutz ermöglicht der Druckabschnitt 46a, welcher mit dem Kupplungsdeckel 13, d.h. mit dem Randbereich des hier geschlossenen Wandabschnitts 13c zusammenwirkt. Das Anschlagbegrenzungselement 46 ist in Richtung zur Nachstellspindel 3 hin mit einer Druckscheibe 47 gekoppelt, die wiederum mit der Zuspannfeder 5a zusammenwirkt und die Nachstellspindel 4 stirnseitig abdeckt.

Um störende Einflüsse der schräg eingeleiteten Zustellkraft des Bremszustellhebels 9 aufgrund eines Achshöhenversatzes zwischen Lagerung des Bremszustellhebels 9 und der Belagverschleißnachstellvorrichtung 1 zu vermeiden, kann das Drehantriebselement 11 mittels einer senkrechten Verzahnung umlaufend über ein Zwischenelement verbunden sein. Auf diese Weise lässt sich das Drehmoment für die Überlast präziser bestimmen.

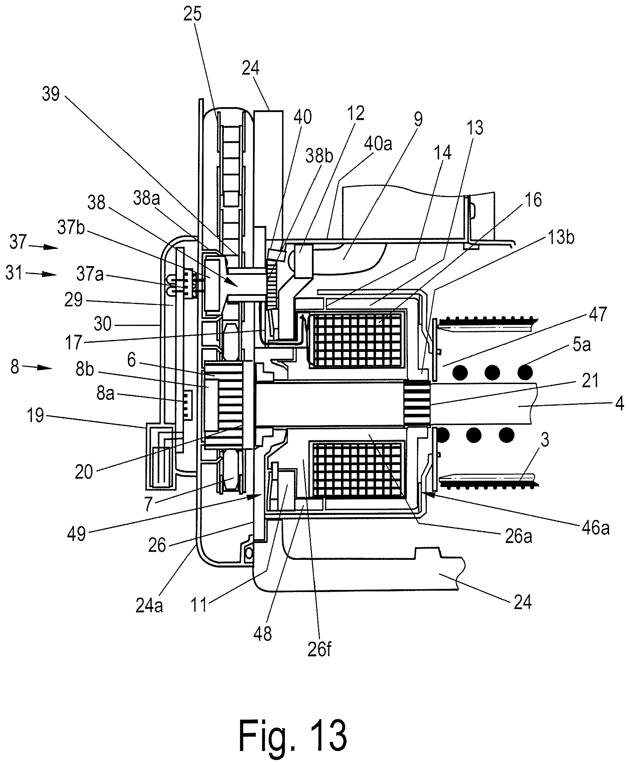

In Fig. 13 ist eine schematische Schnittansicht einer Variante des fünften Ausführungsbeispiels nach Fig. 12 dargestellt, wobei der oben im Zusammenhang mit Fig. 11 beschriebene Zustellhebelsensor 37 vorgesehen ist. Die Betätigung bzw. der Antrieb der Trägerwelle 38 des Zustellhebelsensors 37 ist über das Zahnsegment 40, welches an dem Zahnsegmenthalter 40a angeordnet ist, ausgebildet. Der Zahnsegmenthalter 40a kann z.B. ein Stanzbiegeteil aus Blech sein. Dabei kann er eine bestimmte Elastizität für einen Axialspielausgleich aufweisen. Das Zahnsegment 40 ist schräg angeordnet, wodurch Winkelfehler minimiert werden können.

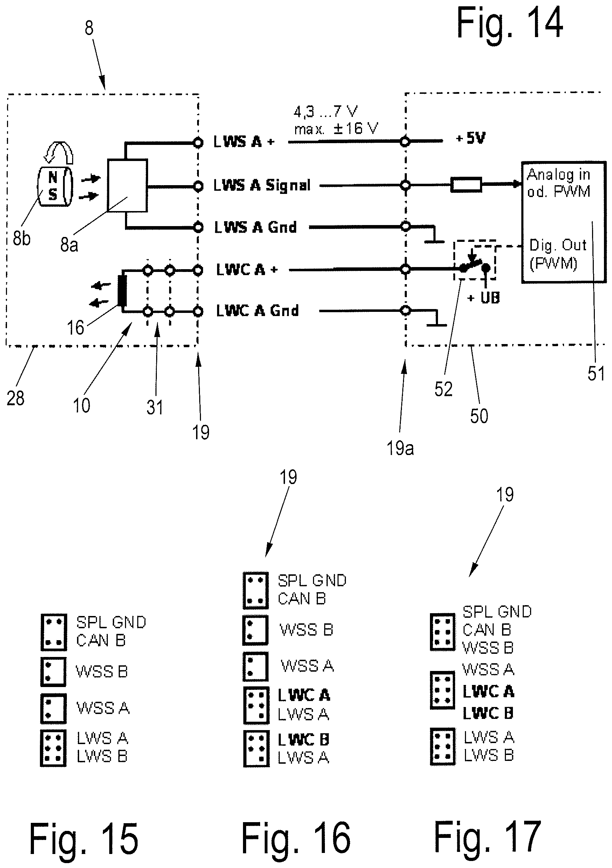

Fig. 14 zeigt ein schematisches Blockschaltbild des zweiten Ausführungsbeispiels nach Fig. 3.

Die Anschlusseinrichtung 28 ist an der Scheibenbremse angeordnet und weist das Verbindungselement 19 in Form eines fünfpoligen Steckverbinders auf. Der Belagverschleißsensor 8 ist mit dem Verschleißsensorelement 8a, z.B. ein Hall-Sensorelement, und dem Verschleißgeberelement 8b, z.B. ein Permanentmagnet mit Nordpol N und Südpol S, gezeigt. Das Verschleißsensorelement 8a ist mit den Anschlüssen LWS A+ (Versorgungsspannung 4,3...7V - max. ±16VDC, LWS A Signal (Signalausgang) und LWS A Gnd (Masse) des Verbindungselementes 19 verbunden.

Weiterhin ist die Elektromagnetspule 16 der Kupplungseinrichtung 10 über die Steckverbindung 31 an die Anschlüsse LWC A+ (Versorgungsspannung) und LWC A Gnd (Masse) des Verbindungselementes 19 angeschlossen.

Über ein mehradriges Kabel ist das Verbindungselement 19 mit einem Verbindungselement 19a einer Steuerung 50 verbunden. Die Steuerung 50 stellt die Versorgungsspannung, z.B. 5V, und den Masseanschluss für das Verschleißsensorelement 8a sowie die Versorgungsspannung +UB (mit Masseanschluss) für die Elektromagnetspule 16 der Kupplungseinrichtung 10 bereit. Die Steuerung 50 weist eine Steuereinrichtung 51, z.B. einen Mikrocomputer, zur Verarbeitung des Signals des Verschleißsensorelementes 8a auf. Außerdem ist die Steuereinrichtung 51 zur Steuerung eines Kupplungsschalters 52 vorgesehen. Der Kupplungsschalter 52 dient zur Einschaltung der Elektromagnetspule 16, indem er diese mit der Versorgungsspannung +UB verbindet. Der Kupplungsschalter 52 kann z.B. ein Relais oder/und ein Halbleiterschalter sein.

Der Belagverschleißsensor 8 erfasst einen Verschleißweg mittels beschriebener Winkelsensorik über mehrere Umdrehungen der Nachstellwelle 4. Das Verschleißsensorelement 8a gibt den erfassten Weg oder/und die erfassten Winkel als Analogsignal oder/und als digitales Signal, z.B. PWM-Signal, mit einer Auflösung von beispielsweise 12 Bit aus. Dieses Signal wird von der Steuereinrichtung 51 mittels einer Auswertesoftware derart verarbeitet, dass der Belagverschleiß der Scheibenbremse als ein elektrisches Signal oder Wert vorliegt, das/der weiter ausgewertet werden kann. Die Steuerung 50 kann z.B. ein so genanntes Druckregelmodul oder/und Bremssteuergerät sein.

Der so erfasste Belagverschleiß wird dann als elektrisches Signal oder entsprechend gespeicherter digitaler Wert mit einem voreinstellbaren Wert, welcher einem Verschleißmaß entspricht, bei dem eine Nachstellung erfolgen soll, verglichen. Wird dieser voreinstellbare Wert erreicht, so wird die Kupplungseinrichtung 10 aktiviert, indem bei der nächsten Bremszuspannung, d.h. Zustellbewegung des Bremszustellhebels 9, die Elektromagnetspule 16 mittels des Kupplungsschalters 52 durch die Steuereinrichtung 51 eingeschaltet und bei der Rückbewegung des Bremszustellhebels 9 wieder ausgeschaltet wird. Dazu erhält die Steuereinrichtung 51 ein Einschalt- und Ausschaltsignal z.B. von dem Bremssteuergerät.

Fig. 15 zeigt eine schematische Darstellung einer üblichen Steckerbelegung an einem Druckregelmodul für zwei Scheibenbremsen A, B mit jeweils einem Potentiometer als Belagverschleißsensor (siehe z.B. Fig. 1). Der gesamte Stecker ist 14-polig.

Fig. 16 und 17 zeigen schematische Darstellungen von verschiedenen Steckerbelegungen der Verbindungselemente 19 des zweiten Ausführungsbeispiels nach Fig. 3. In Fig. 16 ist ein zusätzlicher 6-poliger Stecker erforderlich, da die Anschlüsse LWC A, B für die Elektromagnetspule 16 der jeweiligen Kupplungseinrichtung 10 erforderlich werden. Die gemeinsame Masse kann auch hierzu benutzt werden. Die bisherigen Anschlüsse LWS A, B für den Belagverschleißsensor können weiter verwendet werden. Der gesamte Stecker ist 20-polig.

Fig. 17 zeigt eine Variante des Verbindungselementes 19 mit Verwendung von drei 6-poligen Steckern mit einer gemischten Aufteilung. Der gesamte Stecker ist 18-polig.

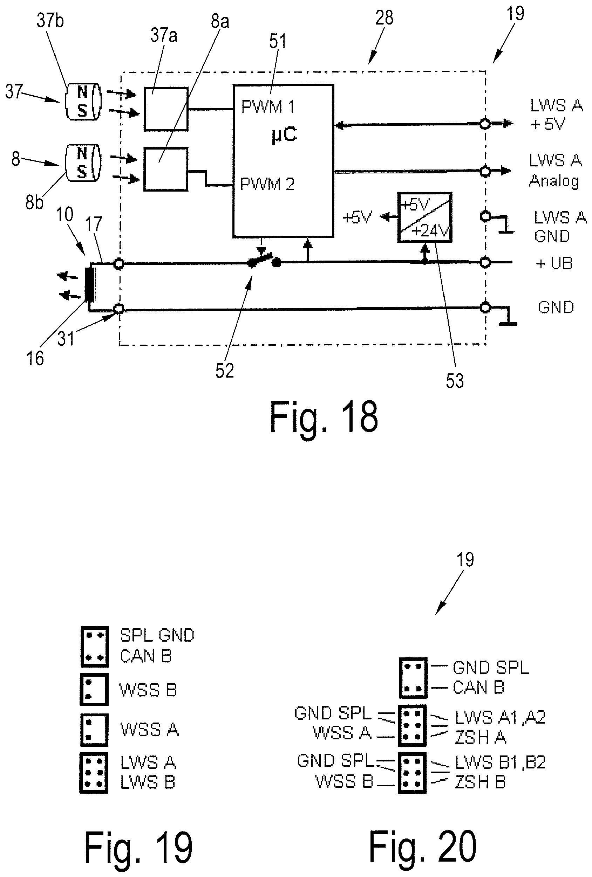

Fig. 18 stellt ein schematisches Blockschaltbild des dritten und vierten Ausführungsbeispiels nach Fig. 5 und 6 in Form einer so genannten Stand-Alone-Version dar.

An der Scheibenbremse (angedeutet durch den strichpunktierten Kasten) ist in der Anschlusseinrichtung 28 die Steuereinrichtung 51, z.B. als Mikrocomputer, auf der Leiterplatte 29 angeordnet. Ebenso sind darauf das Belagverschleißsensorelement 8a, das Zustellsensorelement 37a und der Kupplungsschalter 52 aufgebracht und mit der Steuereinrichtung 51 verbunden. Weiterhin sind die Geberelemente 8 und 37 als Permanentmagneten mit Wirkungspfeilen schematisch angedeutet. Die Elektromagnetspule 16 der Kupplungseinrichtung 10 ist über die Leitung 17 an der Steckverbindung 31 angeschlossen. Das Steckelement 19 ist fünfpolig. Es umfasst die Anschlüsse für eine 5V-Spannungsversorgung, Masse der Sensoren, Signalausgang der Sensoren, UB-Spannungsversorgung der Elektromagnetspule 16 (z.B. 24V) und deren Masse. In diesem Ausführungsbeispiel ist ein zusätzlicher Spannungsregler 53 angeordnet, welcher eine geregelte 5V-Spannung aus der UB-Spannungsversorgung zur Verfügung stellt.

Diese Ausführung ist zur Nachbildung des oben angegebenen Potentiometers ausgebildet und ist voll rückwärtskompatibel. Sie kann als Stand-Alone-Version sowie mit automatischer Erkennung eines Druckregelmoduls (DRM) und entsprechender Digitalausgabe ausgeführt sein.

Fig. 19 zeigt wie Fig. 15 eine schematische Darstellung einer üblichen Steckerbelegung eines Druckregelmoduls.

Fig. 20 ist eine schematische Darstellung einer Steckerbelegung des dritten und vierten Ausführungsbeispiels nach Fig. 5 und 6 des Verbindungselementes 19 mit Verwendung von drei 6-poligen Steckern mit einer gemischten Aufteilung. Der gesamte Stecker ist 16-polig.

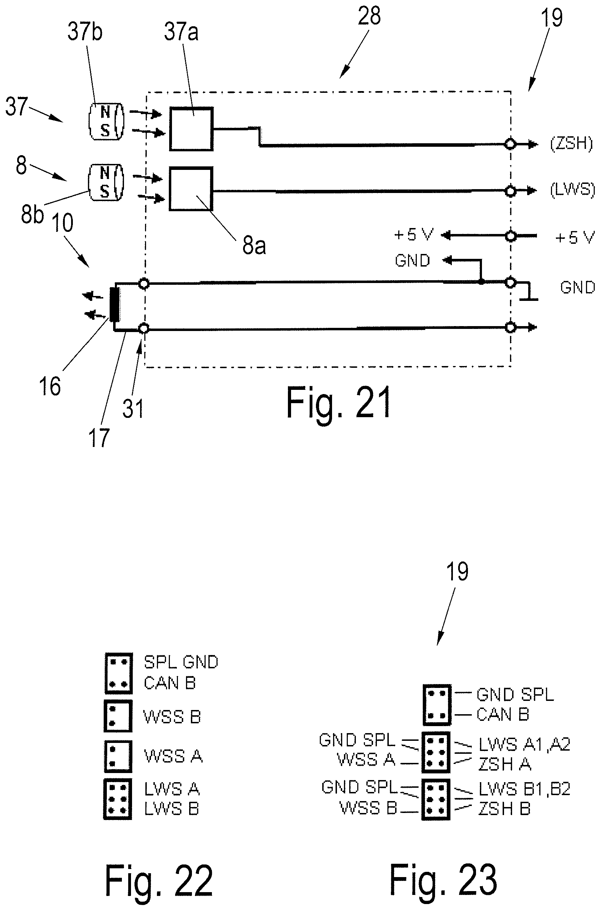

Fig. 21 zeigt ein weiteres schematisches Blockschaltbild des dritten und vierten Ausführungsbeispiels nach Fig. 5 und 6. In dieser Ausführung bildet wird eine so genannte integrierte Lösung dargestellt, bei welcher die Auswerteschaltung, d.h. die Steuereinrichtung 51 Bestandteil eines Druckregelmoduls ist (siehe auch Fig. 14). Es ist daher keine Steuereinrichtung 51 auf der Leiterplatte 29 der Anschlusseinrichtung 28 erforderlich. Die Leiterplatte 29 ist mit dem Verbindungselement 19, der Steckverbindung 31, dem Belagverschleißsensorelement 8a und dem Zustellsensorelement 37a bestückt. Die Anschlussbelegung des Verbindungselementes 19 weist eine gemeinsame Masse, die Spannungsversorgung 5V und UB für die Elektromagnetspule 16 sowie die Signalausgänge LWS als Winkelsensorsignal des Belagverschleißsensors 8 und ZSH als Winkelsensorsignal des Zustellhebelsensors 37 auf.

Fig. 22 ist eine schematische Darstellung einer üblichen Steckerbelegung mit 14 Polen wie Fig. 15 und 19.

Fig. 23 zeigt eine schematische Darstellung einer weiteren Steckerbelegung des dritten und vierten Ausführungsbeispiels nach Fig. 5 und 6 mit einem 16-poligen Stecker.

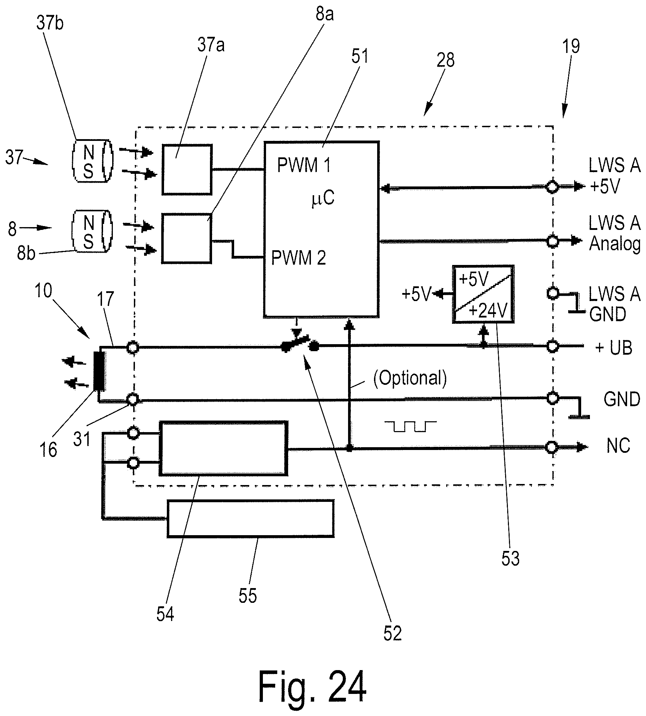

In Fig. 24 ist ein noch weiteres schematisches Blockschaltbild des dritten und vierten Ausführungsbeispiels nach Fig. 5 und 6 dargestellt.

Die Grundlage dieser Ausführung ist der Aufbau nach Fig. 18. Zusätzlich dazu weist die Leiterplatte 29 in der Anschlusseinrichtung eine Signalaufbereitung 54 für ein Drehzahlsignal eines Drehzahlsensors 55 des zu der Scheibenbremse zugehörigen Rades auf. Die Leitung des Drehzahlsensors 55 wird an der Leiterplatte 29 in geeigneter Weise, z.B. Steckverbinder, angeschlossen. Das Drehzahlsignal wird dann von der Signalaufbereitung 54 so verarbeitet, dass ein für elektromagnetische Störungen unanfälliges digitales oder auch analoges Signal erzeugt wird, welches über das Verbindungselement 19 über Anschluss NC mit den anderen Anschlüssen in einem gemeinsamen Kabel zu dem Steuergerät oder Druckregelmodul geführt wird. Dadurch entfallen Stecker und entsprechende Leitungslängen für den Anschluss des Drehzahlsensors 55 am Steuergerät oder Druckregelmodul. Der Ausgang der Signalaufbereitung 54, welcher am Anschluss NC des Verbindungselementes 19 liegt, kann optional auch mit der Steuerungseinrichtung 51 verbunden sein. Auf diese Weise kann die Steuerungseinrichtung 51 eine Drehbewegung des Rades und somit der zugehörigen Bremsscheibe erfassen. Dies kann z.B. als eine zusätzliche Randbedingung bei der Auswertung der Signale der Sensoren 8 und 37 für unterschiedliche Zwecke genutzt werden.

Mit der Belagverschleißnachstellvorrichtung 1 mit dem Belagverschleißsensor 8 und einer Sensierung des Bremszustellhebels 9, z.B. mit dem Zustellhebelsensor 37 (siehe z.B. Fig. 5), kann bei der Stand-Alone-Version ein Reibepunkt, d.h. Anliegen des Bremsbelags 2 an der Bremsscheibe der Scheibenbremse, über den Kraftschluss der Nachstellspindel 4 erkannt werden. Dies erfolgt z.B. dadurch, dass bei sensierter Zustellbewegung des Bremszustellhebels 9 keine Verstellung mittels des Belagverschleißsensors 8 erfasst wird, d.h. eine Nachstellung ist blockiert.

Eine Nachstellung erfolgt bei erfasstem Belagverschleiß nach Erreichen eines voreinstellbaren Vergleichswertes durch Bestromen der Elektromagnetspule 16 der Kupplungseinrichtung 10 kurz vor Beginn einer Bremszustellung durch den Bremszustellhebel 9. Natürlich ist es auch jederzeit möglich, während des zeitlichen Verlaufs der Bremszustellung, die Kupplungseinrichtung 10 ein- und auszuschalten.

Bei der integrierten Version zusammen mit einem aktiven Druckregelmodul kann der Reibepunkt durch Messung des Bremsdrucks und der Bewegung des Bremszustellhebels 9 bei Erreichen des Solldrucks ermittelt werden. Dabei kann eine Auswertung der eventuellen Wegverschiebung von einem gemessenen Kennlinienwert bezogen auf eine gespeicherte Sollkennlinie erfolgen.

Außerdem ist es möglich, die Belagverschleißnachstellvorrichtung 1 durch Bestromung der Elektromagnetspule 16 der Kupplungseinrichtung 10 durch eine Rückbewegung des Bremszustellhebels 9 zurückzustellen, wenn der Bremsbelag 2 ohne Zuspannung an der Bremsscheibe anliegt und schleift. Dazu können z.B. Temperatursensoren an geeigneter Stelle in der Nähe des Bremsbelags 2 bzw. dessen Trägers angeordnet sein, deren Temperaturwerte bei nicht zugespannter Scheibenbremse mit gespeicherten Temperaturwerten verglichen werden. Wenn dabei zu hohe Temperaturen auftreten, kann das ein Kriterium dafür sein, dass der Bremsbelag 2 an der Bremsscheibe anliegt und schleift.

Da der Drehantriebshebel 11 nur bei einem Nachstell- oder Rückstellvorgang, d.h. bei bestromter Elektromagnetkupplung, durch Übertragung eines Drehmomentes belastet wird, wird bei unbestromter Elektromagnetkupplung zwar der Drehantriebshebel verschwenkt, jedoch wird dazu im Gegensatz zu einem Verstellvorgang nur vernachlässigbar geringe Energie benötigt. Das bedeutet z.B., dass die Energie zur Druckluftversorgung einer Druckluftbremse im Vergleich zum Stand der Technik geringer sein kann. Der Drehantriebshebel 11 kann z.B. ein Stanzbiegeteil sein.

Außerdem kann bei einem Ausfall der 5 V-Versorgungsspannung der Sensorik der Kupplungsschalter 52, z.B. durch eine ODER-Verknüpfung in seiner Ansteuerung bei jedem Bremsvorgang eingeschaltet werden, so dass eine Nachstellung weiterhin gewährleistet ist.

Die Erfindung ist nicht auf die oben beschriebenen Ausführungsbeispiele beschränkt. Sie ist selbstverständlich im Rahmen der beigefügten Ansprüche modifizierbar.

So ist es denkbar, dass eine Sensierung der Schwenkbewegung des Bremszustellhebels 9 auf andere als oben beschrieben Weise erfolgen kann.

Die Elektromagnetspule 16 kann auch zwei oder mehr Spulen aufweisen.

Anstelle des Grundaufbaus nach Fig. 18 kann in der Ausführung nach Fig. 24 natürlich auch der Grundaufbau der integrierten Version nach Fig. 14 oder 21 verwendet werden.

Die Anschlusseinrichtung 28 kann als eine zentrale Anschlusseinrichtung an der Bremse z.B. auch Anschlussmöglichkeiten für eine Parkbremse beinhalten. Damit ist eine zentrale Kabelführung und -verlegung zur Bremse möglich.

### Bezugszeichenliste

- 1: Belagverschleißnachstellvorrichtung
- 2: Bremsbelag
- 3: Nachstellspindel
- 4: Nachstellwelle
- 5: Abtriebsrad
- 5a: Zuspannfeder
- 6: Übertragungsende
- 7: Übertragungsrad
- 8: Belagverschleisssensor
- 8a: Verschleißsensorelement
- 8b: Verschleißgeberelement
- 9: Zustellhebel
- 10: Kupplungseinrichtung
- 11: Drehantriebselement
- 11a: Flanschabschnitt
- 12: Zahneingriff
- 13: Kupplungsdeckel
- 13a: Kupplungsbereich
- 13b: Verbindungsabschnitt
- 13c: Wandabschnitt
- 13d: Lösefeder
- 14: Kupplungsabschnitt
- 15: Kupplungsspalt
- 16: Elektromagnetspule
- 17: Leitung
- 18: Verbindungsleitung
- 19, 19a: Verbindungselement
- 20, 21: Axialanschlag
- 22, 23: Reibbelag
- 24: Bremsengehäuse
- 24a: Abdeckung
- 25: Kette
- 26: Außenlager
- 26a: Spulenträger
- 26b: Reibelement
- 26c: Axialfixierung
- 26d: Radialfixierung
- 26e: Kardanische Lagerung
- 26f: Scheibenabschnitt
- 26g: Haltering
- 27: Reibplatte
- 28: Anschlusseinrichtung
- 29: Leiterplatte
- 30: Gehäuse
- 31: Steckverbindung
- 32: Steckverbinder
- 33: Halterung
- 34: Leiterelement
- 34a: Anschlussenden
- 35: Drehbegrenzungselement
- 36: Rampenverzahnung
- 37: Zustellhebelsensor
- 37a: Zustellsensorelement
- 37b: Zustellgeberelement
- 38: Trägerwelle
- 38a: Trägerabschnitt
- 38b: Trägerverzahnung
- 39: Lager
- 40: Zahnsegment
- 40a: Zahnsegmenthalter
- 41: Überlastkupplung
- 42: Kugel
- 43: Koppelelement
- 43a: Koppelelementflansch
- 44: Magnetkraftlinie
- 45: Verdrehschutzelement
- 46: Anschlagbegrenzungselement
- 46a: Reibabschnitt
- 47: Druckscheibe
- 48: Kupplungselement
- 49: Rückstellfeder
- 50: Steuerung
- 51: Steuereinrichtung
- 52: Kupplungsschalter
- 53: Spannungsregler
- 54: Signalaufbereitung
- 55: Drehzahlsensor
- N, S: Permanentmagnetpole

## Patentansprüche

1. Belagverschleißnachstellvorrichtung (1) für eine Scheibenbremse, insbesondere für ein Kraftfahrzeug, mit einer Zuspannvorrichtung mit einem Bremszustellhebel (9), die vorzugsweise in eine Nachstellspindel (3) der Scheibenbremse einsetzbar ist, mit:
a) einer Nachstellwelle (4) mit einem Außenlager (26);
b) einem Drehantriebselement (11); und
c) einer Kupplungseinrichtung (10) zum schaltbaren Kuppeln des Drehantriebselement (11) mit der Nachstellwelle (4),
**dadurch gekennzeichnet, dass**
d) die Kupplungseinrichtung (10) elektrisch schaltbar mit mindestens einer Elektromagnetspule (16) ausgebildet ist.

2. Belagverschleißnachstellvorrichtung (1) nach Anspruch 1, **dadurch gekennzeichnet, dass** die Kupplungseinrichtung (10) mindestens einen Abschnitt des Drehantriebselementes (11) oder/und einen Abschnitt, der mit dem Drehantriebselement (11) drehfest verbunden ist, einen Kupplungsdeckel (13), die mindestens eine Elektromagnetspule (16) und einen Spulenträger (26a) umfasst.

3. Belagverschleißnachstellvorrichtung (1) nach Anspruch 2, **dadurch gekennzeichnet, dass** das Drehantriebselement (11) an einer Eingangsseite der Kupplungseinrichtung (10) um eine gemeinsame Achse der Nachstellspindel (4) und der Kupplungseinrichtung (10) verschwenkbar und axial verschiebbar angeordnet ist.

4. Belagverschleißnachstellvorrichtung (1) nach Anspruch 2, **dadurch gekennzeichnet, dass** das Drehantriebselement (11) an einer Eingangsseite der Kupplungseinrichtung (10) um eine gemeinsame Achse der Nachstellspindel (4) und der Kupplungseinrichtung (10) verschwenkbar und mit einem axial verschiebbaren Kupplungselement (48) drehfest gekoppelt ist.

5. Belagverschleißnachstellvorrichtung (1) nach Anspruch 3 oder 4, **dadurch gekennzeichnet, dass** der Spulenträger (26a) mit dem Drehantriebselement (11) drehfest verbunden ist.

6. Belagverschleißnachstellvorrichtung (1) nach Anspruch 3 oder 4, **dadurch gekennzeichnet, dass** der Spulenträger (26a) mit dem Außenlager (26) der Nachstellwelle (4) feststehend verbunden ist.

7. Belagverschleißnachstellvorrichtung (1) nach Anspruch 3 oder 4, **dadurch gekennzeichnet, dass** der Spulenträger (26a) einen Scheibenabschnitt (26f) mit einer im zentralen Bereich kugelförmigen Schalenaufnahme aufweist, wobei die kugelförmige Schalenaufnahme einen kugelförmigen Vorsprung einer Scheibe des Außenlagers (26) der Nachstellwelle (4) aufnimmt und mit dem kugelförmige Vorsprung der Scheibe des Außenlagers (26) korrespondiert.

8. Belagverschleißnachstellvorrichtung (1) nach einem der Ansprüche 2 bis 7, **dadurch gekennzeichnet, dass** der Kupplungsdeckel (13) die Elektromagnetspule (16) topfförmig umgibt, mit der Nachstellwelle (4) drehfest verbunden ist und einen Kupplungsbereich (13a) aufweist, welcher mit dem Abschnitt des Drehantriebselementes (11) oder mit dem Abschnitt, der mit dem Drehantriebselement (11) drehfest verbunden ist, einen Kupplungsabschnitt (14) bildet.

9. Belagverschleißnachstellvorrichtung (1) nach Anspruch 8, **dadurch gekennzeichnet, dass** der Kupplungsabschnitt (14) mit Reibbelägen (22, 23) ausgebildet ist.

10. Belagverschleißnachstellvorrichtung (1) nach Anspruch 8, **dadurch gekennzeichnet, dass** der Kupplungsabschnitt (14) als Zahnkupplung ausgebildet ist.

11. Belagverschleißnachstellvorrichtung (1) nach Anspruch 10, **dadurch gekennzeichnet, dass** der als Zahnkupplung ausgebildete Kupplungsabschnitt (14) einen schrägen Winkel, der im Bereich von 20° liegt, aufweist.

12. Belagverschleißnachstellvorrichtung (1) nach einem der vorhergehenden Ansprüche, **dadurch gekennzeichnet, dass** die Kupplungseinrichtung (10) mit mindestens einer Lösefeder (13d) oder Rückstellfeder (49) versehen ist.

13. Belagverschleißnachstellvorrichtung (1) nach einem der vorhergehenden Ansprüche, **dadurch gekennzeichnet, dass** das Außenlager (26) mit einer kardanischen Lagerung (26e) der Nachstellwelle (4) ausgebildet ist.

14. Belagverschleißnachstellvorrichtung (1) nach einem der vorhergehenden Ansprüche, **dadurch gekennzeichnet, dass** die Belagverschleißnachstellvorrichtung (1) eine Anschlusseinrichtung (28) aufweist, welche mit der mindestens einen Elektromagnetspule (16) elektrisch leitend verbunden ist.

15. Belagverschleißnachstellvorrichtung (1) nach Anspruch 14, **dadurch gekennzeichnet, dass** die Anschlusseinrichtung (28) eine Steckverbindung (31) aufweist, über welche die Elektromagnetspule (16) elektrisch angeschlossen ist.

16. Belagverschleißnachstellvorrichtung (1) nach Anspruch 15, **dadurch gekennzeichnet, dass** die Steckverbindung (31) Leiter (34) aufweist, welche mittels einer elastischen Halterung (33) durch das Außenlager (26) geführt und in diesem gehalten sind.

17. Belagverschleißnachstellvorrichtung (1) nach einem der Ansprüche 14 bis 16, **dadurch gekennzeichnet, dass** die Belagverschleißnachstellvorrichtung (1) mindestens einen Belagverschleißsensor (8) aufweist.

18. Belagverschleißnachstellvorrichtung (1) nach Anspruch 17, **dadurch gekennzeichnet, dass** der mindestens eine Belagverschleißsensor (8) zumindest teilweise ein Bestandteil der Anschlusseinrichtung (28) ist.

19. Belagverschleißnachstellvorrichtung (1) nach Anspruch 18, **dadurch gekennzeichnet, dass** der mindestens eine Belagverschleißsensor (8) als Winkelsensor ausgebildet ist, wobei ein Verschleißsensorelement (8a) in der Anschlusseinrichtung (28) angeordnet ist und mit einem Verschleißgeberelement (8b) zusammenwirkt, welches mit der Nachstellwelle (4) verbunden ist.

20. Belagverschleißnachstellvorrichtung (1) nach Anspruch 19, **dadurch gekennzeichnet, dass** das Verschleißgeberelement (8b) ein Permanentmagnet ist.

21. Belagverschleißnachstellvorrichtung (1) nach einem der Ansprüche 14 bis 20, **dadurch gekennzeichnet, dass** die Belagverschleißnachstellvorrichtung (1) mindestens einen Zustellhebelsensor (37) aufweist.

22. Belagverschleißnachstellvorrichtung (1) nach Anspruch 21, **dadurch gekennzeichnet, dass** der mindestens eine Zustellhebelsensor (37) zumindest teilweise ein Bestandteil der Anschlusseinrichtung (28) ist.

23. Belagverschleißnachstellvorrichtung (1) nach Anspruch 22, **dadurch gekennzeichnet, dass** der mindestens eine Zustellhebelsensor (37) als Winkelsensor ausgebildet ist, wobei ein Zustellsensorelement (37a) in der Anschlusseinrichtung (28) angeordnet ist und mit einem Zustellgeberelement (37b) zusammenwirkt, welches mit dem Bremszustellhebel (9) gekoppelt ist.

24. Belagverschleißnachstellvorrichtung (1) nach Anspruch 23, **dadurch gekennzeichnet, dass** das Zustellgeberelement (37b) ein Permanentmagnet ist.

25. Belagverschleißnachstellvorrichtung (1) nach einem der Ansprüche 14 bis 24, **dadurch gekennzeichnet, dass** die Anschlusseinrichtung (28) eine Steuereinrichtung (51) aufweist.

26. Belagverschleißnachstellvorrichtung (1) nach einem der vorhergehenden Ansprüche, **dadurch gekennzeichnet, dass** die Kupplungseinrichtung (10) mindestens einen Eigenverdrehschutz aufweist.

27. Verfahren zum Steuern einer Belagverschleißnachstellvorrichtung (1) nach einem der Ansprüche 1 bis 26 einer Scheibenbremse, insbesondere für ein Kraftfahrzeug, mit einer Zuspannvorrichtung mit einem Bremszustellhebel (9), und mindestens eine Nachstellspindel (3), wobei ein Nachstellen bei erfasstem Belagverschleiß bei Erreichen eines voreinstellbaren Vergleichswertes durch Bestromen der Elektromagnetspule (16) der Kupplungseinrichtung (10) bei einer Bremszustellung durch den Bremszustellhebel (9) erfolgt.

28. Verfahren nach Anspruch 27, **dadurch gekennzeichnet, dass** das Bestromen der Elektromagnetspule (16) in Abhängigkeit von einer erfassten Bewegung des Bremszustellhebel (9) erfolgt.

29. Verfahren nach Anspruch 28, **dadurch gekennzeichnet, dass** ein Reibepunkt über den Kraftschluss der Nachstellspindel (4) ermittelt wird, indem die Zustellbewegung des Bremszustellhebels (9) und eine Verstellbewegung der Belagverschleißnachstellvorrichtung (1) erfasst werden.

30. Verfahren nach einem der Ansprüche 27 bis 29, **dadurch gekennzeichnet, dass** die Belagverschleißnachstellvorrichtung (1) durch Bestromen der Elektromagnetspule (16) durch eine Rückbewegung des Bremszustellhebels (9) um einen voreinstellbaren Wert zurückgestellt wird, wenn der Bremsbelag (2) ohne Zuspannung an der Bremsscheibe anliegt und schleift.

31. Scheibenbremse, insbesondere für ein Kraftfahrzeug, mit einer Zuspannvorrichtung mit einem Bremszustellhebel (9) und mindestens einer Nachstellspindel (3), **gekennzeichnet durch** mindestens eine Belagverschleißnachstellvorrichtung (1) nach einem der Ansprüche 1 bis 26.

## Claims

1. Pad wear adjustment device (1) for a disc brake, in particular for a motor vehicle, the brake comprising an application device with a brake application lever (9), which application device can preferably be installed into an adjusting spindle (3) of the disc brake, the device (1) comprising:
a) an adjusting shaft (4) with an external bearing (26);
b) a rotary drive element (11); and
c) a clutch device (10) for a switchable coupling of the rotary drive element (11) to the adjusting shaft (4),
**characterised in that**
d) the clutch device (10) is designed to be electrically switchable with at least one solenoid coil (16).

2. Pad wear adjustment device (1) according to claim 1, **characterised in that** the clutch device (10) comprises at least one section of the rotary drive element (11) and/or a section which is non-rotatable joined to the rotary drive element (11), a clutch cover (13), the at least one solenoid coil (16) and a coil support (26a).

3. Pad wear adjustment device (1) according to claim 2, **characterised in that** the rotary drive element (11) is located on an input side of the clutch device (10) for pivoting about a joint axis of the adjusting spindle (4) and the clutch device (10) and for axial displacement.

4. Pad wear adjustment device (1) according to claim 2, **characterised in that** the rotary drive element (11) is pivotable on an input side of the clutch device (10) about a joint axis of the adjusting spindle (4) and the clutch device (10) and non-rotatably coupled to an axially displaceable clutch element (48).

5. Pad wear adjustment device (1) according to claim 3 or 4, **characterised in that** the coil support (26a) is non-rotatably joined to the rotary drive element (11).

6. Pad wear adjustment device (1) according to claim 3 or 4, **characterised in that** the coil support (26a) is joined in a fixed manner to the external bearing (26) of the adjusting shaft (4).

7. Pad wear adjustment device (1) according to claim 3 or 4, **characterised in that** the coil support (26a) comprises a disc section (26f) with a shell receptacle which is spherical in the central region, wherein the spherical shell receptacle accommodates a spherical projection of a disc of the external bearing (26) of the adjusting shaft (4) and corresponds to the spherical projection of the disc of the external bearing (26).

8. Pad wear adjustment device (1) according to any of claims 2 to 7, **characterised in that** the clutch cover (13) surrounds the solenoid coil (16) in a pot shape, is non-rotatably joined to the adjusting shaft (4) and has a clutch region (13a) which forms a clutch section (14) with the section of the rotary drive element (11) or with the section which is non-rotatably joined to the rotary drive element (11).

9. Pad wear adjustment device (1) according to claim 8, **characterised in that** the clutch section (14) is designed with friction linings (22, 23).

10. Pad wear adjustment device (1) according to claim 8, **characterised in that** the clutch section (14) is designed as a tooth clutch.

11. Pad wear adjustment device (1) according to claim 10, **characterised in that** the clutch section (14) designed as a tooth clutch has an oblique angle in the range of 20°.

12. Pad wear adjustment device (1) according to any of the preceding claims, **characterised in that** the clutch device (10) is provided with at least one release spring (13d) or return spring (49).

13. Pad wear adjustment device (1) according to any of the preceding claims, **characterised in that** the external bearing (26) is designed with a gimbal mounting (26a) of the adjusting shaft (4).

14. Pad wear adjustment device (1) according to any of the preceding claims, **characterised in that** the pad wear adjustment device (1) comprises a connecting device (28), which is connected to the at least one solenoid coil (16) in an electrically conductive manner.

15. Pad wear adjustment device (1) according to claim 14, **characterised in that** the connecting device (28) comprises a plug connection (31), by way of which the solenoid coil (16) is electrically connected.

16. Pad wear adjustment device (1) according to claim 15, **characterised in that** the plug connection (31) comprises conductors (34), which are routed through the external bearing (26) and held therein by means of an elastic holder (33).

17. Pad wear adjustment device (1) according to any of claims 14 to 16, **characterised in that** the pad wear adjustment device (1) comprises at least one pad wear sensor (8).

18. Pad wear adjustment device (1) according to claim 17, **characterised in that** the at least one pad wear sensor (8) is at least partially a part of the connecting device (28).

19. Pad wear adjustment device (1) according to claim 18, **characterised in that** the at least one pad wear sensor (8) is designed as an angle sensor, wherein a wear sensor element (8a) is located in the connecting device (28) and there acts together with a wear transducer element (8b) connected to the adjusting shaft (4).

20. Pad wear adjustment device (1) according to claim 19, **characterised in that** the wear transducer element (8b) is a permanent magnet.

21. Pad wear adjustment device (1) according to any of claims 14 to 20, **characterised in that** the pad wear adjustment device (1) comprises at least one application lever sensor (37).

22. Pad wear adjustment device (1) according to claim 21, **characterised in that** the at least one application lever sensor (37) is at least partially a part of the connecting device (28).

23. Pad wear adjustment device (1) according to claim 22, **characterised in that** the at least one application lever sensor (37) is designed as an angle sensor, wherein an application sensor element (37a) is located in the connecting device (28) and acts together with an application transducer element (37b) coupled to the brake application lever (9).

24. Pad wear adjustment device (1) according to claim 23, **characterised in that** the application transducer element (37b) is a permanent magnet.

25. Pad wear adjustment device (1) according to any of claims 14 to 24, **characterised in that** the connecting device (28) comprises a control device (51).

26. Pad wear adjustment device (1) according to any of the preceding claims, **characterised in that** the clutch device (10) comprises at least one protection device against intrinsic torsion.

27. Method for controlling a pad wear adjustment device (1) according to any of claims 1 to 26 of a disc brake, in particular for a motor vehicle, the brake comprising an application device with a brake application lever (9) and at least one adjusting spindle (3), wherein an adjustment is carried out on the detection of pad wear when a presettable comparison value is reached by applying a current to the solenoid coil (16) of the clutch device (10) at a brake application by the brake application lever (9).

28. Method according to claim 27, **characterised in that** a current is applied to the solenoid coil (16) as a function of a detected movement of the brake application lever (9).

29. Method according to claim 28, **characterised in that** a friction point is determined by way of the frictional connection of the adjusting spindle (4) by detecting the application movement of the brake application lever (9) and an adjusting movement of the pad wear adjustment device (1).

30. Method according to any of claims 27 to 29, **characterised in that** the pad wear adjustment device (1) is reset by a presettable value by applying a current to the solenoid coil (16) by means of a return movement of the brake application lever (9) if the brake pad (2) bears and drags against the brake disc without application.

31. Disc brake, in particular for a motor vehicle, comprising an application device with a brake application lever (9) and at least one adjusting spindle (3) **characterised by** at least one pad wear adjustment device (1) according to any of claims 1 to 26.

## Revendications

1. Dispositif (1) de rattrapage d'usure de garniture d'un frein à disque, notamment pour un véhicule automobile, comprenant un dispositif de serrage ayant un levier (9) d'avance de frein, qui peut être inséré de préférence dans une broche (3) de rattrapage du frein à disque, comprenant:
a) un arbre (4) de rattrapage ayant un palier (26) extérieur,
b) un élément (11) d'entraînement en rotation, et
c) un dispositif (10) d'accouplement pour l'accouplement embrayable de l'élément (11) d'entraînement en rotation à l'arbre (4) de rattrapage,
**caractérisé en ce que**
d) le dispositif (10) d'accouplement est constitué de manière à pouvoir être connecté électriquement à au moins une bobine (16) d'électroaimant.

2. Dispositif (1) de rattrapage d'usure de garniture suivant la revendication 1, **caractérisé en ce que** le dispositif (10) d'accouplement comprend au moins une partie de l'élément (11) d'entraînement en rotation ou/et une partie qui est solidaire en rotation de l'élément (11) d'entraînement en rotation, un couvercle (13) d'accouplement, la au moins une bobine (16) d'électroaimant et un porte-bobine (26a).

3. Dispositif (1) de rattrapage d'usure de garniture suivant la revendication 2, **caractérisé en ce que** l'élément (11) d'entraînement en rotation est, à un côté d'entrée du dispositif (10) d'accouplement, monté pivotant autour d'un axe commun à la broche (4) de rattrapage et au dispositif (10) d'accouplement et coulissant axialement.

4. Dispositif (1) de rattrapage d'usure de garniture suivant la revendication 2, **caractérisé en ce que** l'élément (11) d'entraînement en rotation est, à un côté d'entrée du dispositif (10) d'accouplement, monté pivotant autour d'un axe commun de la broche (4) de rattrapage et du dispositif (10) d'accouplement et solidaire en rotation d'un élément (48) d'accouplement coulissant axialement.

5. Dispositif (1) de rattrapage d'usure de garniture suivant la revendication 3 ou 4, **caractérisé en ce que** le porte-bobine (26a) est solidaire en rotation de l'élément (11) d'entraînement en rotation.

6. Dispositif (1) de rattrapage d'usure de garniture suivant la revendication 3 ou 4, **caractérisé en ce que** le porte-bobine (26a) est relié fixement au palier (26) extérieur de l'arbre (4) de rattrapage.

7. Dispositif (1) de rattrapage d'usure de garniture suivant la revendication 3 ou 4, **caractérisé en ce que** le porte-bobine (26a) a une partie (26f) en forme de disque ayant un logement de coque sphérique dans la région centrale, le logement de coque sphérique recevant une saillie sphérique d'un disque du palier (26) extérieur de l'arbre (4) de rattrapage et correspondant à la saillie sphérique de disque du palier (26) extérieur.

8. Dispositif (1) de rattrapage d'usure de garniture suivant l'une des revendications 2 à 7, **caractérisé en ce que** le couvercle (13) d'accouplement entoure en forme de pot la bobine (16) de l'électroaimant, laquelle est solidaire en rotation de l'arbre (4) de rattrapage et a une région (13a) d'accouplement, qui forme, avec la partie de l'élément (11) d'entraînement en rotation ou avec la partie solidaire en rotation de l'élément (11) d'entraînement, une partie (14) d'accouplement.

9. Dispositif (1) de rattrapage d'usure de garniture suivant la revendication 8, **caractérisé en ce que** la partie (14) d'accouplement est constituée en ayant des garnitures (22,23) de friction.

10. Dispositif (1) de rattrapage d'usure de garniture suivant la revendication 8, **caractérisé en ce que** la partie (14) d'accouplement est constituée sous la forme d'un accouplement à dent.

11. Dispositif (1) de rattrapage d'usure de garniture suivant la revendication 10, **caractérisé en ce que** la partie (14) d'accouplement, constituée en accouplement à dent, a un angle incliné qui est de l'ordre de 20°.

12. Dispositif (1) de rattrapage d'usure de garniture suivant l'une des revendications précédentes, **caractérisé en ce que** le dispositif (10) d'accouplement est pourvu d'au moins un ressort (13d) de desserrage ou d'un ressort (49) de rappel.

13. Dispositif (1) de rattrapage d'usure de garniture suivant l'une des revendications précédentes, **caractérisé en ce que** le palier (26) extérieur est constitué en ayant un montage (26e) à la cardan de l'arbre (4) de rattrapage.

14. Dispositif (1) de rattrapage d'usure de garniture suivant l'une des revendications précédentes, **caractérisé en ce que** le dispositif (1) de rattrapage d'usure de garniture a un dispositif (28) de connexion, qui est relié d'une manière conductrice de l'électricité à la au moins une bobine (16) d'électroaimant.

15. Dispositif (1) de rattrapage d'usure de garniture suivant la revendication 14, **caractérisé en ce que** le dispositif (28) de connexion a une liaison (31) par fiche, par laquelle la bobine (16) d'électroaimant est connectée électriquement.

16. Dispositif (1) de rattrapage d'usure de garniture suivant la revendication 15, **caractérisé en ce que** la liaison (31) par fiche a des conducteurs (34) qui sont guidés dans le palier (26) extérieur au moyen d'une fixation (33) élastique et qui y sont maintenus.

17. Dispositif (1) de rattrapage d'usure de garniture suivant l'une des revendications 14 à 16, **caractérisé en ce que** le disposition (1) de rattrapage d'usure de garniture a au moins un capteur (8) d'usure de garniture.

18. Dispositif (1) de rattrapage d'usure de garniture suivant la revendication 17, **caractérisé en ce que** au moins un capteur (8) d'usure de garniture fait, au moins en partie, partie du dispositif (28) de connexion.

19. Dispositif (1) de rattrapage d'usure de garniture suivant la revendication 18, **caractérisé en ce que** le au moins un capteur (8) d'usure de garniture est constitué sous la forme d'un capteur d'angle, un élément (8a) capteur d'usure étant monté dans le dispositif (28) de connexion et coopérant avec un élément (8b) indicateur d'usure, qui est relié à l'arbre (4) de rattrapage.

20. Dispositif (1) de rattrapage d'usure de garniture suivant la revendication 19, **caractérisé en ce que** l'élément (8b) indicateur d'usure est un aimant permanent.

21. Dispositif (1) de rattrapage d'usure de garniture suivant l'une des revendications 14 à 20, **caractérisé en ce que** le dispositif (1) de rattrapage d'usure de garniture a au moins un capteur (37) de levier d'avance.

22. Dispositif (1) de rattrapage d'usure de garniture suivant la revendication 21, **caractérisé en ce que** le au moins un capteur (37) de levier d'avance fait, au moins en partie, partie du dispositif (28) de connexion

23. Dispositif (1) de rattrapage d'usure de garniture suivant la revendication 22, **caractérisé en ce que** le au moins un capteur de levier d'avance est constitué sous la forme d'un capteur d'angle, un élément (37a) de capteur d'avance étant monté dans le dispositif (28) de connexion et coopérant avec un élément (37b) d'indication d'avance, qui est couplé au levier (9) d'avance de frein.

24. Dispositif (1) de rattrapage d'usure de garniture suivant la revendication 23, **caractérisé en ce que** l'élément (37b) d'indication d'avance est un aimant permanent.

25. Dispositif (1) de rattrapage d'usure de garniture suivant l'une des revendications 14 à 24, **caractérisé en ce que** le dispositif (28) de connexion a un dispositif (51) de commande.

26. Dispositif (1) de rattrapage d'usure de garniture suivant l'une des revendications précédentes, **caractérisé en ce que** le dispositif (10) d'accouplement a au moins une protection vis-à-vis de sa propre torsion.

27. Procédé de commande d'un dispositif (1) de rattrapage d'usure de garniture suivant l'une des revendications 1 à 26 d'un frein à disque, notamment pour un véhicule automobile, comprenant un dispositif de serrage ayant un levier (9) d'avance de frein et au moins une broche (3) de rattrapage, un rattrapage s'effectuant, lors d'une avance de frein par le levier (9) d'avance de frein lorsqu'une usure de garniture est détectée, alors qu'une valeur d'usure pouvant être réglée à l'avance est atteinte, par alimentation en courant de la bobine (16) de l'électroaimant du dispositif (10) d'accouplement.

28. Procédé suivant la revendication 27, caractérisé à ce que l'alimentation en courant de la bobine (16) de l'électroaimant s'effectue en fonction d'un mouvement détecté du levier (9) d'avance de frein.

29. Procédé suivant la revendication 28, **caractérisé en ce que** l'on détermine un point de friction par la force appliquée par la broche (4) de rattrapage, en détectant le mouvement d'avance du levier (9) d'avance de frein et un mouvement de déplacement du dispositif (1) de rattrapage d'usure de garniture.

30. Procédé suivant l'une des revendications 27 à 29, **caractérisé en ce que** l'on rappelle,+ d'une valeur pouvant être réglée à l'avance, par un mouvement de retour du levier (9) d'avance de frein, le dispositif (1) de rattrapage d'usure de garniture, en alimentant en courant la bobine (16) de l'électroaimant, si la garniture (2) de frein s'applique sans serrage au disque de frein et glisse.

31. Frein à disque, notamment pour un véhicule automobile, comprenant un dispositif de serrage ayant un levier (9) d'avance de frein et au moins une broche (3) de rattrapage, **caractérisé par** au moins un dispositif (1) de rattrapage d'usure de garniture suivant l'une des revendications 1 à 26.
